# EUROPÄISCHE PATENTSCHRIFT

(11) **EP 0 284 912 B1**
(45) Veröffentlichungstag und Bekanntmachung des Hinweises auf die Patenterteilung: **24.11.1993**
(21) Anmeldenummer: 88104301.2
(22) Anmeldetag: 18.03.1988
(51) Int. Cl.: C08G 18/50, C08G 18/65, C08G 18/32, B29C 45/00, C08G 18/00, C08G 65/32

(54) **Polyamid- und Polyharnstoffgruppen gebunden enthaltende Elastomere sowie Verfahren zur Herstellung von elastischen, kompakten oder zelligen Formkörpern hieraus**
Elastomers containing polyamide and polyurea groups and procedure for the preparation of elastic, compact or cellular mouldings thereof
Elastomères contenant des groupes polyamide et polyurée et procédé pour la préparation des pièces moulées élastiques, compactes ou cellulaires à base de ceux-ci

(30) Priorität: 28.03.1987 DE 3710432
(43) Veröffentlichungstag der Anmeldung: 05.10.1988
(73) Patentinhaber: BASF Aktiengesellschaft, 67063 Ludwigshafen (DE)
(72) Erfinder: Matzke, Guenter, Dr., D-6900 Heidelberg (DE); Horn, Peter, Dr., D-6900 Heidelberg (DE); Schmidt, Hans Ulrich, D-6700 Ludwigshafen (DE)

(56) Entgegenhaltungen:
- EP-A- 0 109 605
- EP-A- 0 156 165
- EP-A- 0 284 253
- EP-A- 0 284 254
- DE-A- 2 116 882
- DE-A- 3 411 216

## Beschreibung

Die Herstellung von Polyamid-, Polyurethan-, Polyurethan-Polyharnstoff-, Polyharnstoff- und Polyamid-Polyharnstoff-Elastomeren und Verfahren zur Herstellung von kompakten oder zelligen Formkörpern aus derartigen Elastomeren mit Hilfe der RIM-Technik (reaction injection moulding) sind aus zahlreichen Literatur- und Patentpublikationen bekannt.

Die Herstellung von Polyamid-Formkörpern durch aktivierte alkalische Lactampolymerisation wird z.B. ausführlich beschrieben in Kunststoff-Handbuch, Band VI, Polyamide, Carl Hanser Verlag, München, 1966, Seiten 46 bis 49. Schrumpfarme Polyamid-Formkörper können nach Angaben der EP-A-00 99 058 (US-A-4 590 242) hergestellt werden durch aktivierte alkalische Lactampolymerisation nach der Reaktionsspritzguß-Technik unter Zusatz eines ausgewählten Polymeren. Diese Verfahren sind apparativ aufwendig und daher kostspielig, da die Katalysator enthaltende Lactamschmelze und die Aktivator enthaltende Lactamschmelze vorzugsweise bei Temperaturen über 100°C intensiv gemischt, in das Formwerkzeug transportiert und dort bei Temperaturen zwischen 130 und 200°C polymerisiert werden müssen.

Dieser Nachteil kann mit Hilfe des Isocyanat-Polyadditionsverfahrens, insbesondere mit der RIM-Technik, bei dem die Ausgangsstoffe üblicherweise bei Raumtemperatur gemischt und in auf 40 bis 60°C temperierten Formwerkzeugen zur Reaktion gebracht werden, beseitigt werden.

Ein Verfahren zur Herstellung von gegebenenfalls zelligen, elastischen Formkörpern mit einer geschlossenen Oberflächenschicht aus Polyurethan-Polyharnstoff-Elastomeren nach dem Prinzip der Reaktionsspritzgußtechnik (RIM) wird z.B. in der DE-B 26 22 951 (US 4 218 543) beschrieben. Die genannten Systeme bestehen im wesentlichen aus organischen Polyisocyanaten, Polyolen, reaktiven aromatischen Di- bzw. Polyaminen, die in o-Stellung zur Aminogruppe durch Alkylgruppen substituiert sind und starken Katalysatoren für die Reaktion zwischen Hydroxyl- und Isocyanatgruppen. Wesentlich hierbei ist, daß die aromatischen Di- bzw. Polyamine in jedem Verhältnis mit Polyolen des Molekulargewichts 12000 bis 1800 mischbar sind, die Alkylsubstituenten 1 bis 3 Kohlenstoffatome aufweisen, wobei mindestens zwei der Alkylsubstituenten 2 bis 3 Kohlenstoffatome besitzen und jede der o-Stellungen zu den Aminogruppen substituiert ist. Derartige Systeme besitzen Startzeiten bis herab zu weniger als einer Sekunde; der Übergang der flüssigen in die feste Phase erfolgt nahezu schlagartig, was dazu führt, daß das flüssige Reaktionsgemisch in der Form an deren Wandungen gleichsam erstarrt.

Es ist ferner bekannt, daß die Reaktivität von aromatisch gebundenen Aminogruppen gegenüber Isocyanaten durch elektronenanziehende Substituenten stark vermindert werden kann. Beispiele für derartige aromatische Diamine sind nach DE-C-12 16 538 (GB-PS 981 935) 3,3ʹ-Dichlor-4,4ʹ-diamino-diphenylmethan, 3,3ʹ-Dinitro-4,4ʹ-diamino-diphenylmethan und 3,3ʹ-Dichlor-4,4ʹ-diamino-diphenyl, deren Verarbeitung aus gesundheitsschädlichen Bedenken aufwendige und erschwerende Auflagen erfordert. Durch die stark elektronegativen Substituenten dieser Verbindungen wird jedoch die Reaktivität der aromatisch gebundenen Aminogruppen so stark herabgesetzt, daß die Durchhärtung bei nach der Reaktionsspritzgußtechnik hergestellten Formkörpern bis zu 15 Minuten erfordert und damit unwirtschaftlich wird.

Polyurethan-Polyharnstoff-Formulierungen mit im Vergleich zu Systemen gemäß DE-B 26 22 951 etwas verminderter Reaktivität werden nach Angaben der EP-A 026 915 erhalten, wenn man als aromatische Diamine 3,3ʹ,5,5ʹ-tetraalkylsubstituierte 4,4ʹ-Diamino-diphenylmethane verwendet, in denen die Alkylreste gleich oder verschieden sind und einen Methyl-, Ethyl-, Isopropyl-, sek.- oder tert.-Butylrest bedeuten, wobei mindestens einer der Substituenten ein Isopropyl-oder sek.-Butylrest sein muß. Die beschriebenen tetraalkylsubstituierten Diamino-diphenylmethane sind mit den Polyolen in den erforderlichen Mengen bei Raumtemperatur sehr gut mischbar und zeigen nur eine geringe oder gar keine Kristallisationsneigung, so daß die Formulierungen unter den für konventionelle RIM-Systeme üblichen Bedingungen gut handhabbar sind. Es zeigte sich jedoch auch, daß die beschriebenen tetraalkylsubstituierten 4,4ʹ-Diamino-diphenylmethane für spezielle Anwendungen zu wenig reaktiv sein können.

Im Vergleich zu EP-A 026 915 etwas reaktivere Polyurethan-Polyharnstoff-Formulierungen werden in der EP-A 069 286 beschrieben. Als aromatische Diamine verwendet werden trialkylsubstituierte meta-Phenylendiamine, wobei zwei der Alkylsubstituenten gleich oder verschieden und lineare oder verzweigte Alkylreste mit 1 bis 4 C-Atomen sind und der 3. Alkylrest 4 bis 12 C-Atome aufweist oder ein fünf- oder sechsgliedriger Cycloalkylrest ist. Die Formulierungen weisen selbst bei einem relativ hohen Gehalt an Diaminen eine ausreichende Fließfähigkeit auf und ergeben Formkörper mit einer hohen Wärmeformbeständigkeit, die keinen progressiven Abfall der Schubmodulkurven zwischen 100 und 200°C zeigen.

Diese Verfahren weisen alle den Nachteil auf, daß der Reaktivitätsunterschied bei der Addition an Isocyanatgruppen zwischen den höhermolekularen Verbindungen mit mindestens zwei primären Hydroxylgruppen und den aromatischen Diaminen, trotz sterischer Behinderung der Aminogruppen beträchtlich ist und nur durch die Verwendung von synergistisch wirksamen Katalysatorkombinationen aus tertiären Aminen und Metallsalzen, z.B. Dibutylzinndilaurat, zur Beschleunigung der Hydroxyl-Isocyanat-Polyadditionsreaktion überwunden werden kann. Mit Metallsalzkatalysatoren hergestellte Polyurethan-Polyharnstoff-Elastomere depolymerisieren jedoch bei Temperaturen über 150°C, wobei eine länger anhaltende Hochtemperatureinwirkung zur völligen Zerstörung der mechanischen Eigenschaften des Materials führen kann.

Bekannt ist ferner die teilweise oder ausschließliche Verwendung von Polyoxyalkylen-polyaminen mit Molekulargewichten von 1100 bis 16000 zur Herstellung von elastischen Polyurethan-Polyharnstoff- oder Polyharnstoff-Elastomeren z.B. aus den EP-A-033 498 (US 4 269 945), EP-A-81 701, EP-A-93 861 (US 4 396 729), EP-A-92 672, EP-A-93 862 (US 4 444 910 und US 4 433 067), EP-A-93 334 und EP-A-93 336.

Nach Angaben der beispielsweise genannten EP-A-81 701 können höhermolekulare Polyoxyalkylen-polyamine mit an aliphatische oder aromatische Reste gebundenen Aminogruppen verwendet werden. Aliphatische Polyoxyalkylen-polyamine sind jedoch bekanntermaßen äußerst reaktiv, so daß die Verarbeitung von RIM-Formulierungen auf dieser Grundlage, z.B. aufgrund kurzer Schußzeiten und dadurch bedingtem geringem Materialaustrag, maschinentechnisch, insbesondere bei der Fertigung von voluminösen Formkörpern, zu erheblichen Problemen führen kann. Etwas langsamer als aliphatische Polyoxyalkylen-polyamine reagieren die Polyoxyalkylen-polyamine mit aromatisch gebundenen Aminogruppen. Nachteilig an diesen Verbindungen ist die kostspielige Herstellung in mehrstufigen Verfahren sowie insbesondere deren relativ hohe Viskosität, beispielsweise von mehr als 20 000 mPas bei 25°C, die bei der Verarbeitung von Verstärkungsmittel enthaltenden Formulierungen große Schwierigkeiten bereiten kann.

Nach Angaben der US-A-4 552 945 können ferner Polyamid-Polyharnstoff-Elastomere nach dem RIM-Verfahren hergestellt werden durch Umsetzung von organischen Polyisocyanaten, höhermolekularen Verbindungen mit mindestens zwei reaktiven Wasserstoffatomen und einer Kombination von Kettenverlängerungsmittel, die enthält ein spezielles Enamin, ein aromatisches Diamin und gegebenenfalls ein Diol. Derartige Formulierungen zeigen eine langsamere Gelzeit und ermöglichen die Befüllung größerer Formwerkzeuge.

Zur Herstellung von mikrozellularen oder geschäumten Formkörpern auf Polyharnstoff-Basis durch Umsetzung in geschlossenen Formwerkzeugen eines Reaktionsgemisches aus gegebenenfalls modifizierten aromatischen Polyisocyanaten, Verbindungen mit gegenüber Isocyanatgruppen reaktionsfähigen Resten sowie gegebenenfalls Hilfsmitteln und Zusatzstoffen, wobei die Aufbaukomponenten als one shot-Systeme nach der Reaktionsspritzgußtechnik verarbeitet werden, finden nach Angaben der EP-A-0 109 605 Verbindungen Verwendung, die als mit Isocyanatgruppen reaktionsfähige Reste zumindest teilweise Ammoniumcarbamatgruppen gebunden enthalten, die durch Umsetzung von aliphatisch gebundenen, primären oder sekundären Aminogruppen mit Kohlendioxid entstehen. Aufgrund der Salzbildung wird die Löslichkeit und Mischbarkeit der Ammoniumcarbamatgruppen enthaltenden Verbindungen mit den anderen Aufbaukomponenten reduziert. Nachteilig ist ferner die temperaturabhängige Abspaltung des reversibel angelagerten Kohlendioxids unter Bildung von zwei Aminogruppen, die die Reaktion sehr empfindlich gegen Temperatur- und Indexschwankungen macht. Durch die unkontrollierte Kohlendioxidabspaltung in Abhängigkeit von den örtlichen Temperaturschwankungen im Formkörper bei dessen Herstellung können außerdem Bereiche mit unterschiedlichen mechanischen Eigenschaften resultieren. Das gebildete Kohlendioxid führt zu zelligen Formkörpern mit porenhaltiger Randzone und Oberfläche.

Zur Herstellung von Dichtungs- und Überzugsmitteln eignen sich nach Angaben der EP-A-0 156 165 Mischungen aus Prepolymeren mit blockierten Isocyanatendgruppen, Polyiminen, die im wesentlichen keine freien Aminogruppen gebunden haben und erhalten werden durch Umsetzung von mehrwertigen primären Aminen mit Ketonen oder Aldehyden, und Organosilanen. Die feuchtigkeitshärtenden Reaktionsmischungen besitzen eine hohe Lagerbeständigkeit und sind aufgrund ihrer geringen Reaktivität zur Herstellung von Formkörpern mit kurzen Formstandzeiten unbrauchbar.

Bekannt ist ferner die Verwendung von Isocyanatgruppen enthaltenden Prepolymeren und Quasiprepolymeren mit NCO-Gehalten zwischen 9 und 31 Gew.%, die unter Verwendung von gegebenenfalls modifiziertem 4,4'-Diphenylmethan-diisocyanat hergestellt wurden, aus den US-Patentschriften 4 048 105, 4 102 833 und 4 374 210 in Polyurethan-Systemen.

Durch die Auswahl geeigneter höhermolekularer Verbindungen mit mindestens zwei reaktiven Wasserstoffatomen, wie z.B. Polyether- und/oder Polyester-polyolen, Polyoxyalkylen-polyaminen mit an aliphatische oder aromatische Reste gebundenen primären Aminogruppen, oder insbesondere entsprechend substituierter aromatischer primärer Diamine als Kettenverlängerungsmittel sowie von speziellen Katalysatoren oder Katalysatorsystemen versuchte man die RIM-Formulierungen den gegebenen Erfordernissen, wie z.B. Volumen und Geometrie des Formwerkzeugs, anzupassen. Nachteilig an dieser Methode ist jedoch, daß durch die eingesetzten Ausgangsverbindungen nicht nur die Reaktivität der RIM-Formulierungen, sondern auch die mechanischen Eigenschaften der erhaltenen Formkörper beeinflußt werden, so daß Formkörper mit bestimmten Raumformen und größeren Abmessungen teilweise nicht oder nur mit verminderten mechanischen Eigenschaften hergestellt werden können, da die Reaktionsmischungen beispielsweise nicht ausreichend fließfähig sind oder in den erforderlichen Mengen nicht in das Formwerkzeug eingebracht werden können.

Die Aufgabe der vorliegenden Erfindung bestand darin, die Fließfähigkeit von RIM-Formulierungen zu verbessern, ohne daß hierbei die mechanischen Eigenschaften der erhaltenen Formkörper beeinträchtigt werden. Zur Erzielung kurzer Entformzeiten, z.B. von 3 bis 60 Sekunden, ist eine ausreichende Anfangsfestigkeit der hergestellten Formkörper von Bedeutung. Die Elastomeren sollten außerdem einer einstündigen Temperaturbehandlung bei 200°C schadlos ausgesetzt werden können, so daß die Formkörper der on-line-Lackierung unterworfen werden können.

Diese Aufgaben konnten überraschenderweise gelöst werden mit neuen Polyamid- und Polyharnstoffgruppen sowie gegebenenfalls Polyurethangruppen gebunden enthaltenden Elastomeren.

Gegenstand der Erfindung sind somit Polyamid-, Polyharnstoff- und gegebenenfalls Polyurethangruppen enthaltende Elastomere mit
einer Rohdichte nach DIN 53 420 von 800 bis 1400 kg/m³,
einer Reißfestigkeit nach DIN 53 504 von 15 bis 45 N/mm²,
einer Reißdehnung nach DIN 53 504 von 40 bis 400 %,
einer Weiterreißfestigkeit nach DIN 53 515 von 35 bis 140 N/mm,
einer Shore-D-Härte nach DIN 53 505 von 40 bis 80,
einem Biege-E-Modul nach DIN 53 457 von 300 bis 1800 N/mm² und
einer Wärmeformbeständigkeit (HDT) nach ISO-75/B (DIN 53 461) von 80 bis 205°C
erhältlich durch Umsetzung
a) mindestens eines organischen Polyisocyanats und/oder einer modifizierten organischen Polyisocyanatmischung mit einem NCO-Gehalt von 8 bis 33,5 Gew.%, bezogen auf das Polyisocyanatmischungsgewicht, mit
b) einer Mischung aus Polyoxyalkylen-polyaminen und Polyazomethinen, wobei diese ihrerseits erhalten werden durch Umsetzung von Polyoxyalkylen-polyaminen mit einer Funktionalität von 2 bis 4 und einem durchschnittlichen Molekulargewicht von 180 bis 10 000 und mindestens einem organischen Aldehyd oder/und Keton, und
c) mindestens einem aromatischen Diamin, das mindestens einen Alkylsubstituenten in ortho-Stellung zu jeder Aminogruppe gebunden enthält, mit einem Molekulargewicht bis 500
in Gegenwart oder Abwesenheit von
d) Katalysatoren.

Die erfindungsgemäßen Polyamid- und Polyharngruppen gebunden enthaltende Elastomere zeichnen sich durch gute mechanische Eigenschaften aus. Die Materialien besitzen, wie bereits ausgeführt wurde, eine Rohdichte nach DIN 53 420 von 250 bis 1400 kg/m³, vorzugsweise von 1000 bis 1400 kg/m³ und insbesondere von 1000 bis 1200 kg/m³ für kompakte Elastomere und vorzugsweise von 400 bis 1100 kg/m³, und insbesondere von 450 bis 1000 kg/m³ für zellige oder mikrozellulare Elastomere. Derartige Elastomere mit einer Rohdichte nach DIN 53 420 von 800 bis 1400 kg/m³ weisen eine Reißfestigkeit nach DIN 53 504 von 15 bis 45 N/mm², vorzugsweise von 18 bis 33 N/mm², eine Reißdehnung nach DIN 53 504 von 40 bis 400 %, vorzugsweise von 110 bis 350 %, eine Weiterreißfestigkeit nach DIN 53 515 von 35 bis 140 N/mmn, vorzugsweise von 40 bis 120 N/mm, eine Shore-D-Härte nach DIN 53 505 von 40 bis 80, vorzugsweise von 45 bis 75, einen Biege-E-Modul nach DIN 53 457 von 300 bis 1800 und eine Wärmeformbeständigkeit (HDT) nach ISO-75/B (DIN 53 461) von 80 bis 205°C, vorzugsweise von 90 bis 185°C auf.

Gegenstand der Erfindung ist ferner ein Verfahren zur Herstellung von elastischen Formkörpern auf Basis der erfindungsgemäßen Polyamid- und Polyharnstoffgruppen gebunden enthaltenden Elastomeren nach Anspruch 5. wobei die kompakten oder zelligen Formkörper vorzugsweise nach der RIM-Technik in einem geschlossenen temperierten Formwerkzeug hergestellt werden.

Die erfindungsgemäßen Polyamid- und Polyharnstoffgruppen gebunden enthaltende Elastomere zeigen eine hohe Temperaturbeständigkeit und können beispielsweise einer einstündigen Temperung bei 200°C unterworfen werden, ohne daß die Materialien ihre ursprünglichen mechanischen Eigenschaften, wie z.B. Zugfestigkeit oder Dehnung, verlieren.

Die unter Verwendung der Polyazomethine, vorzugsweise der Polyketimine, nach der RIM-Technik hergestellten Polyamid-Polyharnstoff-Formkörper zeigen im Vergleich mit marktgängigen Polyurethan-, Polyurethan-Polyharnstoff- oder Polyharnstoff-Formkörpern deutlich weniger Verarbeitungsfehler, wie z.B. Porosität, Hammerschlag, u.a. und können problemlos den bei der on-line-Lackierung auftretenden Temperaturbedingungen ausgesetzt werden. Die erfindungsgemäß verwendbaren Polyazomethine besitzen mit aliphatischen Polyoxyalkylen-polyaminen vergleichbare niedere Viskositäten und können allein oder in Form von Mischungen mit Polyoxyalkylen-polyaminen und/oder aromatischen alkylsubstituierten primären Polyaminen mit organischen, vorzugsweise aromatischen Polyisocyanaten in Gegenwart oder vorzugsweise Abwesenheit von tertiären Aminen und insbesondere in Abwesenheit von Metallsalzkatalysatoren zu Elastomeren verarbeitet werden. Die erfindungsgemäßen niedrigviskosen Polyazomethine bilden mit den anderen Ausgangsstoffen, sowie gegebenenfalls Katalysatoren, Treibmittel, Hilfsmittel und Zusatzstoffen niedrigviskose RIM-Formulierungen mit verbesserter Fließfähigkeit, die überraschenderweise selbst in Abwesenheit von Metallsalzkatalysatoren trotz verlängerter Gelzeiten rasch durchhärten, so daß die Formkörper bereits nach kurzer Zeit, z.B. vorzugsweise nach 10 bis 15 Sekunden in Abhängigkeit von Größe und Raumform, problemlos entformt werden können und 4 mm dicke Prüfplatten einer sofortigen Biegung um 180°C standhalten. Durch die verminderte Viskosität der Formulierung und die verlängerte Gelzeit kann außerdem die Austragungsmenge mit handelsüblichen Hochdruckspritzgußmaschinen deutlich gesteigert werden, so daß auch großvolumige Formwerkzeuge ohne Schwierigkeiten befüllt werden können.

Zu den zur Herstellung der erfindungsgemäßen Polyamid- und Polyharnstoffgruppen gebunden enthaltenden Elastomeren verwendbaren Ausgangsstoffe ist folgendes auszuführen:
(a) Als organische Polyisocyanate kommen die an sich bekannten aliphatischen, cycloaliphatischen und vorzugsweise aromatischen mehrwertigen Isocyanate in Frage. Im einzelnen seien beispielshaft genannt 1,6-Hexamethylen-diisocyanat, 1-Isocyanato-3,5,5-trimethyl-3-isocyanatomethyl-cyclohexan, 2,4- und 2,6-Hexahydrotoluylendiisocyanat sowie die entsprechenden Isomerengemische, 4,4ʹ-, 2,2ʹ- und 2,4ʹ-Dicyclohexylmethan-diisocyanat sowie die entsprechenden
   Isomerengemische, Mischungen aus 4,4ʹ-, 2,2ʹ- und 2,4ʹ-Dicyclohexylmethan-diisocyanaten und Polymethylen-polycyclohexylen-polyisocyanaten, 2,4- und 2,6-Toluylen-diisocyanat und die entsprechenden Isomerengemische, 4,4ʹ-, 2,4ʹ- und 2,2ʹ-Diphenylmethan-diisocyanat und die entsprechenden Isomerengemische, Mischungen aus 4,4ʹ-, 2,4ʹ- und 2,2ʹ-Diphenylmethan-diisocyanaten und Polyphenyl-polymethylen-polyisocyanaten (Roh-MDI) und Mischungen aus Roh-MDI und Toluylen-diisocyanaten.
   Häufig werden auch sogenannte modifizierte mehrwertige Isocyanate, d.h. Produkte, die durch chemische Umsetzung obiger Di- und/oder Polyisocyanate erhalten werden, verwendet. Beispielhaft genannt seien Ester-, Harnstoff-, Biuret-, Allophanat- und vorzugsweise Carbodiimid-, Isocyanurat- und/oder Urethangruppen enthaltende Di- und/oder Polyisocyanate. Im einzelnen kommen beispielsweise in Betracht: Urethangruppen enthaltende aromatische Polyisocyanate mit NCO-Gehalten von 33,6 bis 8 Gew.%, vorzugsweise von 31 bis 21 Gew.%, beispielsweise mit niedermolekularen Diolen, Triolen, Oxalkylenglykolen, Dioxyalkylenglykolen oder Polyoxyalkylen-glykolen mit Molekulargewichten bis 800 modifiziertes 4,4ʹ-Diphenylmethan-diisocyanat oder Toluylen-diisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 25 bis 8 Gew.%, vorzugsweise von 21 bis 14 Gew.%. Bewährt haben sich ferner flüssige Carbodiimidgruppen und/oder Isocyanuratringe enthaltende Polyisocyanate mit NCO-Gehalten von 33,6 bis 8, vorzugsweise 31 bis 21 Gew.%, z.B. auf Basis von 4,4ʹ-, 2,4ʹ- und/oder 2,2ʹ-Diphenylmethan-diisocyanat und/oder 2,4- und/oder 2,6-Toluylen-diisocyanat und vorzugsweise 2,4- und 2,6-Toluylen-diisocyanat sowie die entsprechenden Isomerengemische, 4,4ʹ-, 2,4ʹ- und 2,2ʹ-Diphenylmethan-diisocyanat sowie die entsprechenden Isomerengemische z.B. aus 4,4ʹ- und 2,4ʹ-Diphenylmethan-diisocyanaten, Mischungen aus Diphenylmethan-diisocyanaten und Polyphenyl-polymethylen-polyisocyanaten (Roh-MDI) und Gemische aus Toluylen-diisocyanaten und Roh-MDI.
   Insbesondere kommen jedoch zur Anwendung: (i) Carbodiimid- und/oder Urethangruppen enthaltende Polyisocyanate aus 4,4ʹ-Diphenylmethan-diisocyanat oder einer Mischung aus 4,4ʹ- und 2,4ʹ-Diphenylmethan-diisocyanten mit einem NCO-Gehalt von 33,6 bis 8 Gew.%, (ii) NCO-Gruppen enthaltende Prepolymere mit einem NCO-Gehalt von 8 bis 25 Gew.%, bezogen auf das Prepolymergewicht, hergestellt durch Umsetzung von Polyoxyalkylen-polyolen mit einer Funktionalität von 2 bis 4 und einem Molekulargewicht von 600 bis 6000 mit 4,4ʹ-Diphenylmethan-diisocyanat oder einer Mischung aus 4,4ʹ- und 2,4ʹ-Diphenylmethan-diisocyanaten und Mischungen aus (i) und (ii).
   Zur Herstellung der NCO-Gruppen enthaltenden Prepolymeren eignen sich, wie bereits dargelegt wurde, Polyoxyalkylen-polyole mit einer Funktionalität von 2 bis 4, vorzugsweise 2 bis 3 und insbesondere 3 und einem Molekulargewicht von 600 bis 6000, vorzugsweise von 2000 bis 4500. Analoge Polyoxyalkylen-polyole mit Molekulargewichten von ungefähr 132 bis 10 000 werden eingesetzt zur Polyoxyalkylen-polyaminherstellung, den Ausgangsstoffen zur Herstellung der Polyazomethine (b). Derartige Polyoxyalkylen-polyole können nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Bortrifluorid-Etherat u.a. oder Bleicherde als Katalysatoren aus einem oder mehreren Alkylenoxiden mit 2 bis 4 Kohlenstoffatomen im Alkylenrest und einem Startermolekül, das 2 bis 4, vorzugsweise 2 bis 3, reaktive Wasserstoffatome gebunden enthält, hergestellt werden.
   Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,Nʹ-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4ʹ-, 2,4ʹ- und 2,2ʹ-Diamino-diphenylmethan.
   Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin, Ammoniak und Hydrazin. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan und Pentaerythrit.
   Die Polyoxyalkylen-polyole können einzeln oder in Form von Mischungen verwendet werden.
(b) Polyazomethine (b) im Sinne der Erfindung sind Reaktionsprodukte aus Polyoxyalkylen-polyaminen mit 2 bis 4, vorzugsweise 2 bis 3 an aromatische oder vorzugsweise an aliphatische Reste gebundenen primären Aminogruppen und einem durchschnittlichen Molekulargewicht von 180 bis 10 000, vorzugsweise von 180 bis 5 500 und insbesondere 1100 bis 5500 und mindestens einem organischen Aldehyd und/oder vorzugsweise mindestens einem organischen Keton.
   Die vorzugsweise zur Anwendung kommenden Polyoxyalkylen-polyamine mit an aliphatische Reste gebundenen Aminogruppen können nach bekannten Verfahren, beispielsweise durch Cyanoalkylierung der beschriebenen Polyoxyalkylen-polyole und anschließende Hydrierung des gebildeten Nitrils (US-A-3 267 050) oder durch Aminierung von Polyoxyalkylen-polyolen mit Ammoniak in Gegenwart von Wasserstoff und Katalysatoren (DE-A-12 15 373) hergestellt werden.
   Geeignete Polyoxyalkylen-polyamine mit an aromatische Reste gebundenen Aminogruppen können beispielsweise hergestellt werden durch Umsetzung der oben beschriebenen Polyoxyalkylen-polyole mit aromatischen Polyisocyanaten im Verhältnis von NCO-:OH-Gruppen von mindestens 2 und anschließende Hydrolyse der erhaltenen aromatische NCO-Gruppen aufweisenden Prepolymeren zu Polyaminen analog den Verfahren der DE-A-29 48 419, DE-A-30 39 600, EP-A-84 141, EP-A-79 512, EP-A-97 290, EP-A-97 298, EP-A-97 299, EP-A-99 537, EP-A-113 027, EP-A-113 020 oder EP-A-154 768.
   Die Polyoxyalkylen-polyamine können als Einzelverbindungen oder in Form von Mischungen aus Produkten mit unterschiedlichen Molekulargewichten und Funktionalität verwendet werden. Bei Verwendung von Polyoxyalkylen-polyolen mit Molekulargewichten kleiner als 180, z.B. von niedermolekularen Polyoxyethylen-glykolen, als Ausgangskomponente ist erforderlich, daß die erhaltenen Polyoxyalkylen-polyamine mit höhermolekularen Polyoxyalkylen-polyaminen in einer solchen Menge gemischt werden, daß das durchschnittliche Molekulargewicht 180 bis 10 000 bei einer Funktionalität von 2 bis 4 beträgt. Als Polyoxyalkylen-polyamine verwendbar sind ferner Mischungen aus Polyoxyalkylen-polyolen und Polyoxyalkylen-polyaminen und/oder teilweise aminierten Polyoxyalkylen-polyolen mit der Maßgabe, daß mindestens 50 %, vorzugsweise mindestens 64 % und insbesondere mehr als 90 % der reaktiven Endgruppen Aminogruppen sind und diese zweckmäßigerweise zu mindestens 85 %, vorzugsweise zu mehr als 90 % aus primären Aminogruppen bestehen.
   Als andere Ausgangskomponente zur Herstellung der Polyazomethine (b) (b) finden organische, vorzugsweise aliphatische und/oder cycloaliphatische Aldehyde und/oder insbesondere organische, vorzugsweise aliphatische und/oder cycloaliphatische Ketone oder Mischungen aus den genannten Verbindungen Verwendung. Als geeignete Aldehyde seien beispielsweise genannt: Acetaldehyd, 3-Methoxi-, 3-Ethoxi-, 3-Propoxi-, 3-Isopropoxi-, 3-n-Butoxi- und 2-Ethyl-hexoxi-2,2-dimethyl-propanol, 2-Formylisobuttersäurealkylester mit 1 bis 4 Kohlenstoffatomen im Alkylrest z.B. 2-Formylisobuttersäureethylester, 3-(Methyl-carbonyloxi)- und 3-(Isopropyl-carbonyloxi)-2,2-dimethyl-propanol, (Methoxiacetoxi)-2,2-dimethyl-propanal, 2-Acetoxi-2-methyl-propanal und insbesondere 2-Formylisobuttersäuremethylester und 2,2-Dimethyl-propanal. Als aliphatische und/oder vorzugsweise cycloaliphatische Ketone kommen beispielsweise in Betracht: Aceton, Methylethylketon, Diethylketon, Methylpropylketon, Methyl-isopropylketon, Methyl-n-butylketon, Diisopropylketon, Phenylmethylketon, vorzugsweise Methylisobutylketon, Methylcyclohexanon und insbesondere Cyclopentanon und Cyclohexanon.
   Zur Herstellung der Polyazomethine aus der Gruppe der Polyaldimine und vorzugsweise der Polyketimine werden die Polyoxyalkylen-polyamine, vorzugsweise die Polyoxyalkylen-di- und/oder -triamine mit einem Überschuß mindestens eines Aldehyds und/oder vorzugsweise Ketons, vorzugsweise in einem -NH₂/-CHO- bzw. 〉CO-Verhältnis von 1:1 bis 5, insbesondere von 1:1,1 bis 4 gemischt und zweckmäßigerweise nach Zusatz eines geeigneten Lösungs- oder Verdünnungsmittels, wie z.B. Toluol, Xylol, Benzol, Methylenchlorid, Dichlorethan, Cyclohexan, n-Hexan oder Heptan und gegebenenfalls einer anorganischen oder organischen Säure, wie z.B. Salzsäure, Ameisensäure oder Benzoesäure oder Arylsulfonsäure, wie z.B. p-Toluolsulfonsäure als Katalysator, so lange in Gegenwart eines unter den Reaktionsbedingungen inerten Gases am Wasserabscheider erhitzt, bis die theoretisch zu erwartende oder bei partieller Reaktion, die gewünschte Wassermenge abgetrennt ist. Üblicherweise sind hierzu Reaktionszeiten von 1 bis 60, vorzugsweise 5 bis 40 Stunden erforderlich. Derartige Verfahren werden z.B. beschrieben in Houben-Weyl, Methoden der organischen Chemie, Band VII/2b, Teil II, Georg Thieme Verlag, Stuttgart 1976, 4. Aufl., Seiten 1948 ff.
   Eine Reinigung der Polyazomethine, beispielsweise durch Filtration, ist üblicherweise nicht notwendig. Die Polyazomethine können nach Abdestillieren des überschüssigen Aldehyd und/oder Ketons und, falls in Gegenwart eines Lösungs- oder Verdünnungsmittels kondensiert wurde, des vorzugsweise eingesetzten Lösungs- oder Verdünnungsmittels direkt zur Herstellung der erfindungsgemäßen Polyamid- und Polyharnstoffgruppen gebunden enthaltenden Elastomeren verwendet werden.
   Als Polyazomethine besonders geeignet sind Polyketimine, die hergestellt werden durch Umsetzung von Polyoxyalkylen-polyaminen mit einer Funktionalität von 2 bis 4 und einem Molekulargewicht von 180 bis 10 000, ausgewählt aus der Gruppe der Polyoxyethylen-polyamine, Polyoxypropylen-polyamine, Polyoxytetramethylen-polyamine, Polyoxypropylen-polyoxyethylen-polyamine, Polyoxytetramethylen-polyoxypropylen- und/oder -polyoxyethylen-polyamine, mit aliphatischen und/oder cycloaliphatischen Ketonen ausgewählt aus der Gruppe Methylisobutylketon, Methylcyclohexanon und vorzugsweise Cyclohexanon und Cyclopentanon, wobei zur Herstellung der erfindungsgemäßen Polyamid- und Polyharnstoffgruppen enthaltenden Elastomeren jedoch insbesondere Polyoxyalkylen-polyamine oder -mischungen mit einem durchschnittlichen Molekulargewicht von 1100 bis 5500 eingesetzt werden.
   Anstelle der Polyazomethine (b) können zur Herstellung der erfindungsgemäßen Polyamid- und Polyharnstoffgruppen gebunden enthaltenden Elastomeren auch Mischungen verwendet werden aus den oben beschriebenen Polyoxyalkylen-polyaminen und Polyaldiminen und/oder vorzugsweise Polyketiminen. Derartige Mischungen können beispielsweise erhalten werden durch Mischen von Polyoxyalkylen-polyaminen mit vorab hergestellten Polyazomethinen (b). Nach der vorzugsweise zur Anwendung kommenden Verfahrensweise werden die eingesetzten Polyoxyalkylen-polyamine jedoch mit unterschüssigen Mengen an Aldehyden und/oder vorzugsweise Ketonen zur Reaktion gebracht, so daß die vorliegenden Aminogruppen nur partiell in Azomethingruppen übergeführt werden. In Betracht kommen beispielsweise Mischungen aus Polyoxyalkylen-polyaminen und Polyazomethinen, vorzugsweise Polyketiminen, in solchen Mengen, daß diese aufweisen:
   10 bis 90 %, vorzugsweise 30 bis 60 % und insbesondere 30 bis 50 % primäre Aminogruppen von Polyoxyalkylen-polyaminen mit einer Funktionalität von 2 bis 4 und einem durchschnittlichen Molekulargewicht von 180 bis 10 000 und
   90 bis 10 %, vorzugsweise 70 bis 40 % und insbesondere 70 bis 50 % Azomethingruppen, vorzugsweise Ketimingruppen, von Polyazomethinen, vorzugsweise Polyketiminen, hergestellt durch Umsetzung der oben beschriebenen Polyoxyalkylen-polyamine mit mindestens einem aliphatischen und/oder cycloaliphatischen Aldehyd oder vorzugsweise aliphatischen und/oder cycloaliphatischen Keton, wobei die Prozente bezogen sind auf die Summe der Amino- und Aldimin- oder vorzugsweise Ketimingruppen.
(c) Als alkylsubstituierte aromatische Polyamine mit Molekulargewichten bis 500, vorzugsweise von 122 bis 400, werden zweckmäßigerweise primäre aromatische Diamine verwendet, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den Polyazomethinen (b) unter den Verarbeitungsbedingungen zumindest teilweise, vorzugsweise jedoch vollständig mischbar sind. Bewährt haben sich beispielsweise alkylsubstituierte meta-Phenylendiamine der Formeln 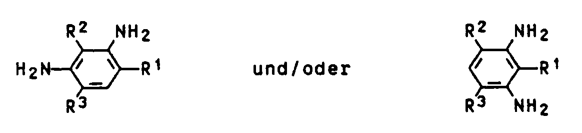 in denen R³ und R² gleich oder verschieden sind und einen Methyl-, Ethyl-, Propyl- und Isopropylrest bedeuten und R¹ ein linearer oder verzweigter Alkylrest mit 1 bis 10, vorzugsweise 1 bis 6 Kohlenstoffatomen ist. Gut bewährt haben sich auch verzweigte Alkylreste R¹ mit 4 bis 6 Kohlenstoffatomen, bei denen die Verzweigungsstelle am C₁-Kohlenstoffatom sitzt. Als Reste R¹ seien beispielhaft genannt der Methyl-, Ethyl-, Isopropyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl-, Cyclohexyl-, 1-Methyl-n-propyl-, tert.-Butyl-, 1-Ethyl-n-propyl-, 1-Methyl-n-butyl- und 1,1-Dimethyl-n-propyl-Rest.
   Als alkylsubstituierte m-Phenylendiamine kommen beispielsweise in Betracht: 2,4-Dimethyl-6-cyclohexyl-, 2-Cyclohexyl-4,6-diethyl-, 2-Cyclohexyl-2,6-isopropyl-, 2,4-Dimethyl-6-(1-ethyl-n-propyl)-, 2,4-Dimethyl-6-(1,1-dimethyl-n-propyl)-, 2-(1-Methyl-n-butyl)-4,6-dimethylphenylendiamin-1,3. Vorzugsweise verwendet werden 1-Methyl-3,5-diethyl-2,4- und/oder -2,6-phenylendiamine, 2,4-Dimethyl-6-tert.-butyl-, 2,4-Dimethyl-6-isooctyl- und 2,4-Dimethyl-6-cyclohexyl-phenylen-diamin-1,3.
   Geeignete sind ferner 3,3ʹ-di- und/oder 3,3ʹ,5,5ʹ-tetra-n-alkylsubstituierte 4,4ʹ-Diamino-diphenylmethane wie z.B. 3,3ʹ-Dimethyl-, 3,3ʹ-Diethyl-, 3,3ʹ-Di-n-propyl-, 3,3ʹ,5,5ʹ-Tetramethyl-, 3,3ʹ,5,5ʹ-Tetraethyl- und 3,3ʹ,5,5ʹ-Tetra-n-propyl-4,4ʹ-diamino-diphenylmethan.
   Als alkylsubstituierte 4,4ʹ-Diamino-diphenylmethane finden vorzugsweise solche der Formel 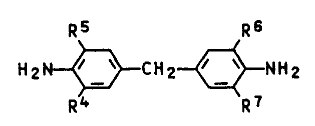 Verwendung, in der R⁴, R⁵, R⁶ und R⁷ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die 4,4ʹ-Diamino-diphenylmethane können auch im Gemsich mit Isomeren der Formeln 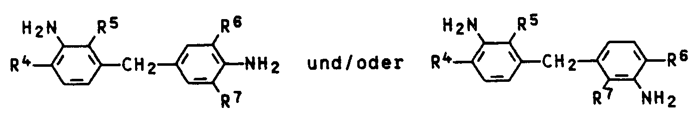 verwendet werden, wobei R⁴, R⁵, R⁶ und R⁷ die oben genannte Bedeutung haben.
   Beispielhaft genannt seien: 3,3ʹ,5-Trimethyl-5ʹ-isopropyl-, 3,3ʹ,5-Triethyl-5ʹ-isopropyl-, 3,3ʹ,5-Trimethyl-5ʹ-sek.-butyl-, 3,3ʹ,5-Triethyl-5ʹ-sek.butyl-4,4ʹ-diamino-diphenylmethan, 3,3ʹ-Dimethyl-5,5ʹ-diisopropyl-, 3,3ʹ-Diethyl-5,5ʹ-diisopropyl-, 3,3ʹ-Dimethyl-5,5ʹ-di-sek.-butyl-, 3,3ʹ-Diethyl-5,5ʹ-di-sek.-butyl-, 3,5-Dimethyl-3ʹ,5ʹ-diisopropyl-, 3,5-Diethyl-3ʹ,5ʹ-diisopropyl-, 3,5ʹ-Dimethyl-3ʹ,5-di-sek.-butyl-, 3,5-Diethyl-3ʹ,5ʹ-di-sek.-butyl-4,4ʹ-diamino-diphenylmethan, 3-Methyl-3ʹ,5,5ʹ-triisopropyl-, 3-Ethyl-3ʹ,5,5ʹ-triisopropyl-, 3-Methyl-3ʹ-ethyl-5,5ʹ-diisopropyl-, 3-Methyl-3ʹ,5,5ʹ-tri-sek.-butyl-, 3-Ethyl-3ʹ,5,5ʹ-tri-sek.-butyl-4,4ʹ-diamino-diphenylmethan, 3,3ʹ-Diisopropyl-5,5ʹ-di-sek.-butyl-, 3,5-Diisopropyl-3ʹ,5ʹ-di-sek.-butyl-, 3-Ethyl-5-sek.-butyl-3ʹ,5ʹ-diisopropyl-, 3-Methyl-5-tert.-butyl-3ʹ,5ʹ-diisopropyl-, 3-Ethyl-5-sek.-butyl-3ʹ-methyl-5ʹ-tert.-butyl-, 3,3ʹ,5,5ʹ-Tetraisobutyl- und 3,3ʹ,5,5ʹ-Tetra-sek.-butyl-4,4ʹ-diamino-diphenylmethan. Vorzugsweise verwendet werden 3,5-Dimethyl-3ʹ,5ʹ-diisopropyl- und 3,3ʹ,5,5ʹ-Tetraisopropyl-4,4ʹ-diamino-diphenylmethan. Die Diamino-diphenylmethane könnnen einzeln oder in Form von Mischungen eingesetzt werden.
   Zur Herstellung der Polyamid- und Polyharnstoffgruppen gebunden enthaltenden Elastomeren und Formkörper hieraus werden vorzugsweise die technisch gut zugänglichen 1,3,5-Triethyl-2,4-phenylen-diamin, 1-Methyl-3,5-diethyl-2,4-phenylendiamin, Mischungen aus 1-Methyl-3,5-diethyl-2,4- und -2,6-phenylen-diaminen, sogenanntes Detda, Isomerengemische aus 3,3ʹ-di- oder 3,3ʹ,5,5ʹ-tetraalkylsubstituierten 4,4ʹ-Diamino-diphenylmethanen mit 1 bis 4 C-Atomen im Alkylrest, insbesondere Methyl-, Ethyl- und Isopropylreste gebunden enthaltende 3,3ʹ,5,5ʹ-tetralkylsubstituierte 4,4ʹ-Diamino-diphenylmethane sowie Gemische aus den genannten tetraalkylsubstituierten 4,4ʹ-Diamino-diphenylmethanen und Detda verwendet.
   Zur Herstellung der erfindungsgemäßen Elastomeren werden die organischen Polyisocyanate und/oder modifizierten Polyisocyanatmischungen (a), Polyazomethine (b) und alkylsubstituierten primären aromatische Polyamine (c) in solchen Mengen zur Reaktion gebracht, daß das Äquivalenz-Verhältnis von NCO-Gruppen der Komponente (a) zur Summe der reaktiven Wasserstoffatome der Komponenten (b) und (c) 1:0,85 bis 1,25, vorzugsweise 1:0,95 bis 1,15 und insbesondere 1:0,98 bis 1,10 beträgt und das Verhältnis von Azomethingruppen oder der Summe aus Azomethin- und Aminogruppen der Komponente (b) zu primären aromatischen Aminogruppen der Komponente (c) 95 bis 60 zu 5 bis 40, vorzugsweise 80 bis 73 zu 20 bis 27 ist.
(d) Die erfindungsgemäßen Polyamid- und Polyharnstoffgruppen gebunden enthaltende Elastomeren werden vorzugsweise in Abwesenheit von Katalysatoren hergestellt. Sofern jedoch Katalysatoren Anwendung finden, werden insbesondere stark basische Amine eingesetzt, wobei zur Erzielung von wärmebeständigen Formkörpern, die der on-line-Lackierung unterworfen werden können, die Abwesenheit von synergistisch wirkenden organischen Metallverbindungen z.B. organischen Zinnverbindungen, zwingend erforderlich ist. Als geeignete Katalysatoren seien beispielsweise genannt: Amidine, wie z.B. 2,3-Dimethyl-3,4,5,6-tetrahydropyrimidin und tertiäre Amine, wie z.B. Triethylamin, Tributylamin, Dimethylbenzylamin, N-Methyl-, N-Ethyl-, N-Cyclohexylmorpholin, N,N,Nʹ,Nʹ-Tetramethyl-ethylendiamin, N,N,Nʹ,Nʹ-Tetramethyl-butandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazo-bicyclo-(2,2,2)-octan.
   Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetralkylammoniumhydroxide, wie z.B. Tetramethylammoniumhydroxid, Alkalihydroxide, wie z.B. Natriumhydroxid und Alkalialkoholate, wie z.B. Natriummethylat und Kaliumisopropylat sowie Alkalisalze von langkettigen Fettsäuren mit 10 bis 20 C-Atomen und gegebenenfalls seitenständigen OH-Gruppen. Verwendet werden üblicherweise 0,001 bis 5 Gew.%, vorzugsweise 0,05 bis 2 Gew.% Katalysator, bezogen auf das Gewicht der Komponente (b).
   Zur Herstellung von elastischen Formkörpern auf Basis der erfindungsgemäßen polyamid- und polyharnstoffgruppenhaltigen Elastomeren können der Reaktionsmischung aus den Komponenten (a) bis (c) sowie gegebenenfalls (d) gegebenenfalls Treibmittel (e) zur Erzielung zelliger Formkörper sowie gegebenenfalls Hilfsmittel (f) und/oder Zusatzstoffe (g) einverleibt werden.
(e) Als Treibmittel zur Herstellung von zelligen Formkörpern eignet sich z.B. Wasser, das mit Isocyanatgruppen unter Bildung von Kohlendioxid reagiert. Die Wassermengen, die zweckmäßigerweise verwendet werden können, betragen 0,1 bis 1,0, vorzugsweise 0,2 bis 0,4 Gew.%, bezogen auf das Gewicht der Komponenten (b) und (c).
   Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.
   Die zweckmäßigste Menge an niedrigsiedender Flüssigkeit zur Herstellung von zellhaltigen Formkörpern aus polyamid- und polyharnstoffhaltigen Elastomeren hängt ab von der Dichte, die man erreichen will sowie gegebenenfalls von der Mitverwendung von Wasser. Im allgemeinen liefern Mengen von 1 bis 15 Gew.%, vorzugsweise 2 bis 11 Gew.%, bezogen auf das Gewicht der Komponenten (b) und (c), zufriedenstellende Ergebnisse.
(f) und (g) Als geeignete Hilfsmittel (f) und/oder Zusatzstoffe (g) seien beispielhaft genannt: oberflächenaktive Substanzen, Schaumstabilisatoren, Zellregler, Füllstoffe, Verstärkungsmittel, Flammschutzmittel, äußere und/oder innere Trennmittel, Farbstoffe, Pigmente, Hydrolyseschutzmittel, fungistatisch und bakteriostatisch wirkende Substanzen.
   Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Gennant seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Die oberflächenaktiven Substanzen werden üblicherwise in Mengen von 0,01 bis 5 Gewichtsteilen, bezogen auf 100 Gewichsteile der Komponenten (b) und (c) angewandt.
   Als Füllstoffe, insbesondere verstärkend wirkende Füllstoffe sind die an sich bekannten üblichen organischen und anorganischen Füllstoffe, Verstärkungsmittel, Beschwerungsmittel, Mittel zu Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyetherolen analog den Angaben der deutschen Patenschriften 11 11 394, 12 22 669, (US 3 304 273, 3 383 351, 3 523 093), 11 52 536 (GB 1 040 452) und 11 52 537 (GB 987 618) hergestellt und danach aminiert werden sowie Fillerpolyoxyalkylen-polyamine, bei denen wäßrige Polymerdispersionen in Polyoxyalkylen-polyamin-dispersionen übergeführt werden.
   Die anorganischen und organischen Füllstoffe können einzeln oder als Gemische verwendet werden. Vorzugsweise Anwendung finden geschlichtete Kurzglasfasern mit Längen kleiner als 0,4 mm, vorzugsweise kleiner als 0,2 mm.
   Die anorganischen und/oder organischen Füllstoffe und/oder Verstärkungsmittel werden der Reaktionsmischung vorteilhafterweise in Mengen von 0,5 bis 35 Gew.%, vorzugsweise 3 bis 20 Gew.%, bezogen auf das Gewicht der Komponenten (a) bis (c), einverleibt.
   Geeignete Flammschutzmittel sind beispielsweise Trikresylphosphat, Tris-2-chlorethylphosphat, Tris-chlorpropylphosphat und Tris-2,3-dibrompropylphosphat.
   Außer den bereits genannten halogensubstituierten Phosphaten können auch anorganische Flammschutzmittel, wie z.B. Aluminiumoxihydrat, Antimontrioxid, Arsenoxid, Ammoniumpolyphosphat und Calciumsulfat oder Melamin zum Flammfestmachen der Formkörper verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile der Komponenten (b) und (c) zu verwenden.
   Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wein, 1. und 2. Auflage, 1966 und 1983 zu entnehmen.
   Die elastischen, kompakten oder zelligen Formkörper auf Basis der erfindungsgemäßen polyamid- und polyharnstoffgruppenhaltigen Elastomeren werden zweckmäßigerweise nach dem one shot-Verfahren mit Hilfe der Niederdruck-Technik oder insbesondere der Reaktionsspritzguß-Technik (RIM) in offenen oder vorzugsweise geschlossenen Formwerkzeugen, hergestellt. Die Reaktionsspritzguß-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plasics, März/April 1973, Seiten 76-84.
   Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Komponenten (b) und (c) und gegebenenfalls (d) bis (g) in der Komponente (A) zu vereinigen und als Komponente (B) die organischen Polyisocyanate oder modifizierte Polyisocyantmischungen zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.
   Die Menge des in das Formwerkzeug eingebrachten Reaktionsgemisches wird so bemessen, daß die erhaltenen gegebenenfalls zelligen Formkörper eine Dichte von 250 bis 1400 kg/m³ besitzen, wobei die kompakten Formkörper eine Dichte vorzugsweise von 1000 bis 1400 kg/m³, die zelligen und mikrozellularen Formkörpern vorzugsweise eine Dichte von 400 bis 1100 kg/m³, z.B. für Schuhsohlen von 450 bis 750 kg/m³ und für Verkleidungselemente von 700 bis 1100 kg/m³ aufweisen. Die Ausgangskomponenten werden mit einer Temperatur von 15 bis 80°C, vorzugsweise von 30 bis 65°C in das Formwerkzeug eingebracht. Die Formwerkzeugtemperatur beträgt zweckmäßigerweise 20 bis 90°C, vorzugsweise 35 bis 70°C. Die Verdichtungsgrade zur Herstellung der mikrozellularen oder zelligen Formkörper liegen zwischen 1,1 und 8, vorzugsweise zwischen 2 und 6.
   Obgleich die erfindungsgemäß hergestellten Elastomer-Formkörper trennfreundlich sind, kann es zur Verbesserung der Entformung vorteilhaft sein, die Formwerkzeuginnenflächen mit üblichen äußeren Formtrennmitteln, beispielsweise auf Wachs- oder Silikonbasis, zu beschichten. Insbesondere bewährt haben sich jedoch und daher vorzugsweise verwendet werden innere Formtrennmittel, wie sie beispielsweise beschrieben werden in der EP-A-153 639, EP-A-180 749 (AU 85/47 498), EP-A-173 888 (US 4 519 965), WO 84/03288 (EP-A-119 471) und WO 86/01215. Die Formstandzeiten betragen in Abhängigkeit von der Größe und Geometrie des Formteils durchschnittlich 3 bis 60 Sekunden.
   Die nach dem erfindungsgemäßen Verfahren erhältlich kompakten Formkörper finden insbesondere Verwendung in der Kraftfahrzeug- und Flugzeugindustrie, beispielsweise als Stoßstangenabdeckungen, Rammschutzleisten, Karosserieteile, wie z.B. Regenrinnen, Kotflügel, Spoiler, Radkastenverbreiterungen sowie andere technische Gehäuseteile und Laufrollen. Die zelligen Formkörper eignen sich für Schuhsohlen, Armlehnen, Kopfstützten, Sonnenblenden, Sicherheitsabdeckungen in Fahrzeugkabinen, sowie als Motorrad-, Traktor- oder Fahrradsattel, Sitzkissen und Deckschichten in Verbundkörpern.

### A. Herstellung der Polyazomethine

### Beispiel 1

690 g eines Polyoxypropylen-diamins der Struktur 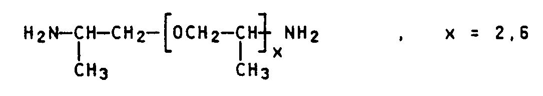
und einem mittleren Molekulargewicht von 230 mit mindestens 91 Gew.% primären Aminogruppen (Jeffamine® D-230 der Texaco) wurden mit 647 g Cyclohexanon und 300 ml Toluol gemischt und so lange unter Rückflußkühlung am Wasserabscheider erhitzt, bis sich kein Wasser mehr abschied (Dauer ca. 10 Stunden). Anschließend wurden das Lösungsmittel und überschüssige Cyclohexanon unter vermindertem Druck bei 100 bis 120°C abdestilliert.

Das Infrarotspektrum zeigte bei 1662 cm⁻¹ eine starke Ketiminbande. Die Viskosität des Rückstands betrug bei 25°C 80 mPas.

### Beispiel 2

600 g eines Polyoxypropylen-triamins der Struktur 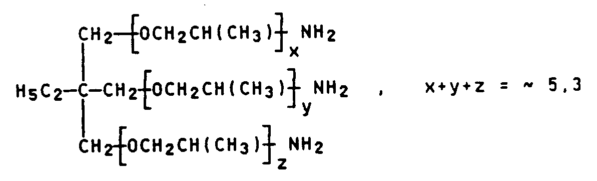
und einem mittleren Molekulargewicht von 440 mit mindestens 87 Gew.% primären Aminogruppen (Jeffamine® T-403 der Texaco) wurden mit 441 g Cyclohexanon und 300 ml Toluol gemischt und so lange unter Rückflußkühlung am Wasserabscheider erhitzt, bis sich kein Wasser mehr abschied (Dauer ca. 10 Stunden). Danach wurden das Lösungsmittel und überschüssiges Cyclohexanon unter vermindertem Druck bei 100 bis 120°C abdestilliert. Die Viskosität des Rückstandes betrug bei 25°C 840 mPas. Das IR-Spektrum zeigte bei 1662 cm⁻¹ eine starke Ketiminbande.

### Beispiel 3

2500 g eines Polyoxypropylen-diamins der Struktur 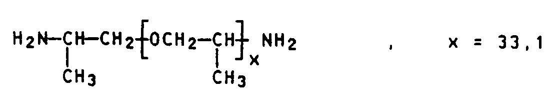
und einem mittleren Molekulargewicht von 2000 mit mindestens 91 Gew.% primären Aminogruppen (Jeffamine® D-2000) wurden mit 269,5 g Cyclohexanon und 650 ml n-Hexan gemischt und so lange unter Rückflußkühlung am Wasserabscheider erhitzt, bis sich kein Wasser mehr abschied (Dauer ca. 20 Stunden). Anschließend wurden das n-Hexan und überschüssiges Cyclohexanon unter vermindertem Druck bei 120°C abdestilliert. Die Viskosität des Rückstands betrug bei 25°C 320 mPas. Die Ketiminbande erschien im IR-Spektrum bei 1663 cm⁻¹.

### Beispiel 4

2500 g des in Beispiel 3 verwendeten Polyoxypropylen-diamins wurden mit 308 g eines Isomerengemisches mit einem durchschnittlichen Molekulargewicht von 112, das enthielt 65 Gew.% 3-Methylcyclohexanon, 25 Gew.% 4-Methylcyclohexanon und 8 Gew.% Cyclohexanon und 650 ml Toluol gemischt und so lange unter Rückflußkühlung am Wasserabscheider erhitzt, bis sich kein Wasser mehr abschied (Dauer ca. 12 Stunden). Die Viskosität des Rückstandes betrug bei 25°C 430 mPas. Das IR-Spektrum zeigte bei 1662 cm⁻¹ die Ketiminbande.

### Beispiel 5

2500 g des in Beispiel 3 verwendeten Polyoxypropylen-diamins wurden mit 276 g Methylisobutylketon und 850 ml Toluol sowie 10 ml Ameisensäure gemischt und so lange unter Rückflußkühlung am Wasserabscheider erhitzt, bis kein Wasser mehr abgeschieden wurde (Dauer ca. 60 Stunden). Anschließend wurden das überschüssige Keton und das Lösungsmittel unter vermindertem Druck bei 100 bis 120°C abdestilliert. Die Viskosität des erhaltenen Rückstands betrug bei 25°C 300 mPas. Im IR-Spektrum zeigte sich bei 1661 cm⁻¹ eine schwache Ketiminbande.

### Beispiel 6

2500 g des in Beispiel 3 verwendeten Polyoxypropylen-diamins wurden mit 231 g Cyclopentanon und 650 ml Toluol gemischt und so lange unter Rückflußkühlung am Wasserabscheider erhitzt, bis kein Wasser mehr abgeschieden wurde (Dauer ca. 9 Stunden). Die Aufarbeitung erfolgte analog den Angaben des Beispiels 2. Die Viskosität des erhaltenen Polyetherdiketimins betrug 375 mPas. Die Ketiminbande erschien im IR-Spektrum bei 1679 cm⁻¹.

### Beispiel 7

4000 g Polyoxypropylen-triamin mit der in Beispiel 2 beschriebenen Struktur, jedoch mit einem mittleren Molekulargewicht von 5000 und ca. 70 Gew.% primären Aminogruppen (Jeffamine® T 5000 der Texaco) wurden mit 259 ml Cyclohexanon und 1000 ml Toluol gemischt und so lange unter Rückflußkühlung am Wasserabscheider erhitzt, bis kein Wasser mehr abgeschieden wurde (Dauer ca. 10 Stunden). Die Aufarbeitung erfolgte analog den Angaben des Beispiels 3. Die Viskosität des Polyethertriketimins betrug 424 mPas. Das IR-Spektrum zeigte bei 1663 cm⁻¹ eine schwache Ketiminbande.

### B. Herstellung der Polyamid- und Polyharnstoffgruppen gebunden enthaltende Elastomeren

### Allgemeine Herstellungsvorschrift:

Die Aufbaukomponenten wurden auf einer Hochdruckdosieranlage vom Typ Puromat® 30 der Elastogran Maschinenbau verarbeitet. Die Temperatur der A-Komponente betrug, wenn nicht anders vermerkt, 65°C, die der Komponente B immer 50°C. Das metallische Formwerkzeug besaß die Innenabmessungen 400 x 200 x 4 mm und wies, wenn keine Angabe erfolgt, eine Temperatur von 65°C auf. Die Entformzeit betrug 15 bis 20 Sekunden. Die in den Beispielen genannten Teile beziehen sich auf das Gewicht.

### Beispiel 8

### A-Komponente:

Mischung aus
20,0 Teilen des gemäß Beispiel 7 hergestellten Polyoxypropylen-triketimins,
60,0 Teilen Polyoxypropylen-diamin mit einem mittleren Molekulargewicht von 2000 mit mindestens 91 Gew.% primären Aminogruppen (Jeffamine® D-2000 der Texaco) und
20,0 Teilen einer Mischung aus 80,0 Teilen 1-Methyl-3,5-diethylphenylendiamin-2,4 und 20,0 Teilen 1-Methyl-3,5-diethylphenylendiamin-2,6 - im folgenden abgekürzt DETDA - genannt.

### B-Komponente:

Mit Carbodiimidgruppen-modifiziertes 4,4ʹ-Diisocyanato-diphenylmethan mit einem NCO-Gehalt von 29,5 Gew.%.

Die Komponenten A und B wurden im Mischungsverhältnis von A:B = 100:44,2 mit einem Index von 105 verarbeitet. Die Komponenten- und Werkzeugtemperaturen betrugen 50°C.

An dem eine Stunde bei 120°C getemperten Formteil wurden folgende mechanische Daten gemessen:

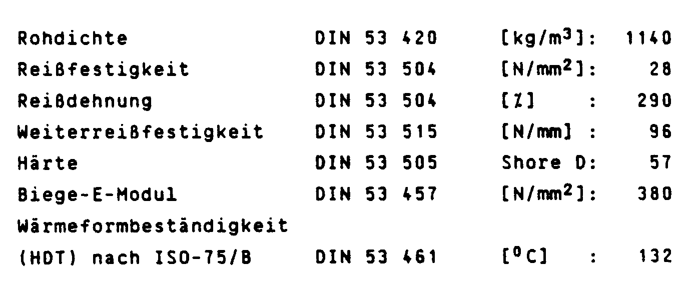

### Beispiel 9

### A-Komponente:

Mischung aus
27 Teilen des Polyoxypropylen-triketimins, hergestellt nach den Angaben des Beispiels 7,
3 Teilen Polyoxypropylen-triamin mit einem mittleren Molekulargewicht von 440 und mindestens 87 Gew.% primären Aminogruppen (Jeffamine® T-403) der Texaco),
50 Teilen Polyoxypropylen-diamin mit einem mittleren Molekulargewicht von 2000 mit mindestens 91 Gew.% primären Aminogruppen und
20 Teilen DETDA.

### B-Komponente: analog Beispiel 8

Die Komponenten A und B wurden im Mischungsverhältnis von A:B = 100:46,5 mit einem Index von 105 verarbeitet. Die Komponenten- und Werkzeugtemperaturen betrugen 50°C.

An dem eine Stunde bei 120°C getemperten Formteil wurden folgende mechanische Daten gemessen:

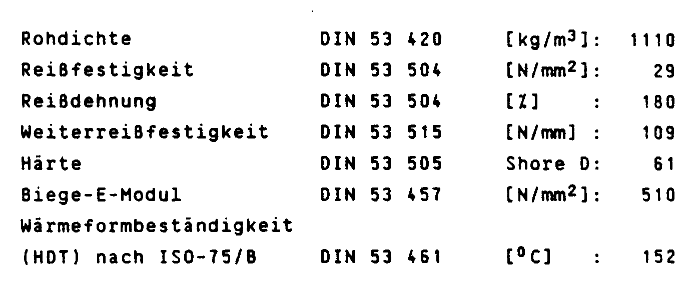

### Beispiel 10

### A-Komponente:

Mischung aus
36,5 Teilen des Polyoxypropylen-diketimins, hergestellt nach den Angaben des Beispiels 3,
17,25 Teilen Polyoxypropylen-triamin mit einem mittleren Molekulargewicht von 5000 und ungefähr 70 Gew.% primären Aminogruppen (Jeffamine® T 5000 der Texaco),
17,25 Teilen Polyoxypropylen-diamin mit einem mittleren Molekulargewicht von 2000 und mindestens 91 Gew.% primären Aminogruppen (Jeffamine® D-2000 der Texaxo),
2,0 Teilen Polyoxypropylen-triamin mit einem mittleren Molekulargewicht von 440 und mindestens 87 Gew.% primären Aminogruppen (Jeffamine® T-403 der Texaco) und
27,0 Teilen DETDA

### B-Komponenten:

NCO-Gruppen enthaltendes Prepolymers mit einem NCO-Gehalt von 19,2 Gew.% und einer Viskosität bei 25°C von 1975 mPas; hergestellt durch Umsetzung von 3545 Teilen eines Carbodiimidgruppen enthaltenden 4,4ʹ-Diphenylmethandiisocyanates mit einem NCO-Gehalt von 29,5 Gew.% und 1505 Teilen eines Glycerin gestarteten Polyoxypropylen-triols mit einer Hydroxyzahl von 42 bei einer Reaktionstemperatur von 80°C unter Rühren.

Die Komponenten A und B wurden im Mischungsverhältnis von A:B = 100:87,0 und einem Index von 105 nach der allgemeinen Herstellungsvorschrift verarbeitet.

An dem eine Stunde bei 120°C getemperten Formteil wurden folgende mechanische Daten gemessen:

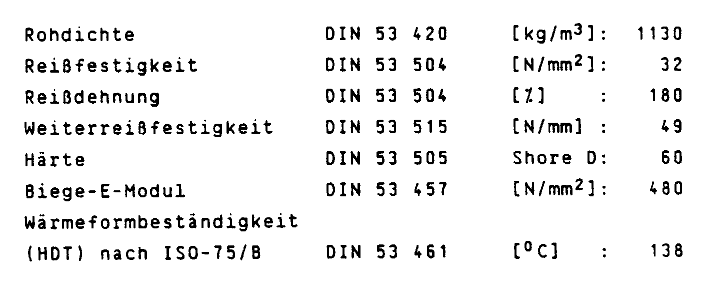

### Beispiel 11

### A-Komponente:

Mischung aus
45,0 Teilen des Polyoxypropylen-diketimins, hergestellt nach den Angaben des Beispiels 3,
10,0 Teilen Polyoxypropylen-triamin mit einem mittleren Molekulargewicht von 5000 und ungefähr 70 Gew.% primären Aminogruppen (Jeffamine® T 5000 der Texaco),
17,5 Teilen Polyoxypropylen-diamin mit einem mittleren Molekulargewicht von 2000 und mindestens 91 Gew.% primären Aminogruppen (Jeffamine® D-2000 der Texaco),
0,5 Teilen Polyoxypropylen-triamin mit einem mittleren Molekulargewicht von 440 und mindestens 87 Gew.% primären Aminogruppen (Jeffamine® T-403 der Texaco),
22,0 Teilen DETDA und
5,0 Teilen eines Gemisches aus 95 Gew.% 3,3ʹ,5,5ʹ-Tetraisopropyl-4,4ʹ-diamino-diphenylmethan und 5 Gew.% 3,3ʹ-Dimethyl-5,5ʹ-diisopropyl-4,4ʹ-diamino-diphenylmethan.

### B-Komponente: analog Beispiel 10

Die Komponenten A und B wurden im Mischungsverhältnis von A:B = 100:78,6 und einem Index von 105 nach der allgemeinen Herstellungsvorschrift verarbeitet.

An dem eine Stunde bei 120°C getemperten Formteil wurden folgende mechanische Daten gemessen:

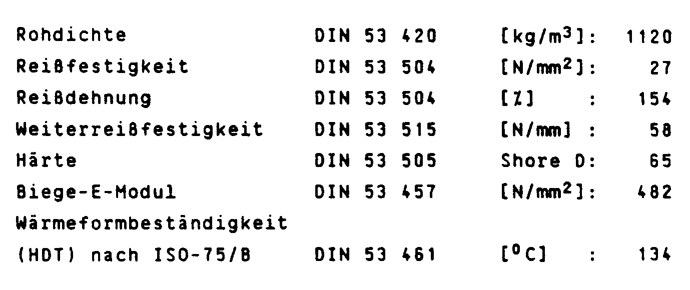

### Beispiel 12

### A-Komponente:

Mischung aus
45,0 Teilen des Polyoxypropylen-diketimins, hergestellt nach den Angaben des Beispiels 3,
28,0 Teilen Polyoxypropylen-diamin mit einem mittleren Molekulargewicht von 2000 und mindestens 91 Gew.% primären Aminogruppen (Jeffamine® D-2000 der Texaco) und
27,0 Teilen DETDA.

### B-Komponente: analog Beispiel 10

Die Komponenten A und B wurden im Mischungsverhältnis von A:B = 100:85,3 und einem Index von 105 nach der allgemeinen Herstellungsvorschrift verarbeitet.

An dem eine Stunde bei 120°C getemperten Formteil wurden folgende mechanische Daten gemessen:

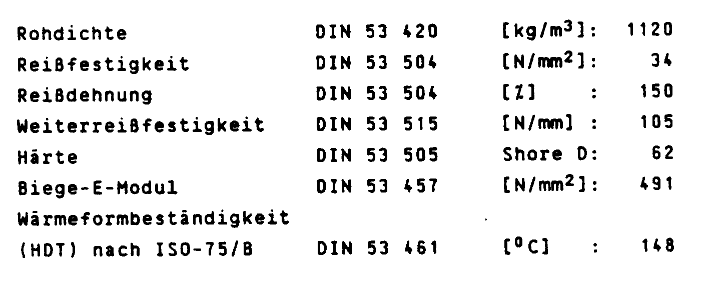

### Beispiel 13

### A-Komponente:

Mischung aus
44,65 Teilen des Polyoxypropylen-diketimins, hergestellt nach den Angaben des Beispiels 6,
28,35 Teilen Polyoxypropylen-diamin mit einem mittleren Molekulargewicht von 2000 und mindestens 91 Gew.% primären Aminogruppen (Jeffamine® D-2000 der Texaco) und
27,0 Teilen DETDA.

### B-Komponente: analog Beispiel 10

Die Komponenten A und B wurden im Mischungsverhältnis von A:B = 100:85,4 und einem Index von 105 nach der allgemeinen Herstellungsvorschrift verarbeitet.

An dem eine Stunde bei 120°C getemperten Formteil wurden folgende mechanische Daten gemessen:

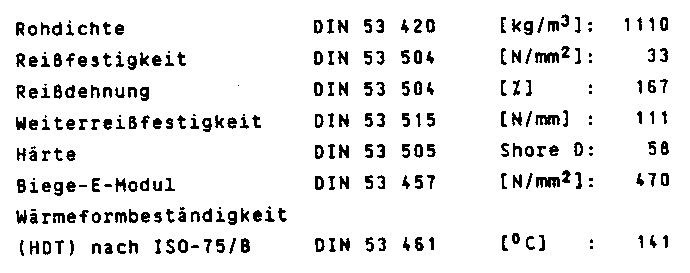

### Beispiel 14

### A-Komponente:

Mischung aus
43,0 Teilen des Polyoxypropylen-diketimins, hergestellt nach den Angaben des Beispiels 3,
10,0 Teilen Polyoxypropylen-triamin mit einem mittleren Molekulargewicht von 5000 und ungefähr 70 Gew.% primären Aminogruppen (Jeffamine® T 5000 der Texaco),
17,5 Teilen Polyoxypropylen-diamin mit einem mittleren Molekulargewicht von 2000 und mindestens 91 Gew.% primären Aminogruppen (Jeffamine® D-2000 der Texaxo),
0,5 Teilen Polyoxypropylen-triamin mit einem mittleren Molekulargewicht von 440 und mindestens 87 Gew.% primären Aminogruppen (Jeffamine® T-403 der Texaco),
22,0 Teilen DETDA und
7,0 Teilen eines Gemisches aus 95 Gew.% 3,3ʹ,5,5ʹ-Tetraisopropyl-4,4ʹ-diamino-diphenylmethan und 5 Gew.% 3,3ʹ-Dimethyl-5,5ʹ-diisopropyl-4,4ʹ-diamino-diphenylmethan.

### B-Komponente: analog Beispiel 10

Die Komponenten A und B wurden im Mischungsverhältnis von A:B = 100:80,7 und einem Index von 105 nach der allgemeinen Herstellungsvorschrift verarbeitet.

An dem eine Stunde bei 120°C getemperten Formteil wurden folgende mechanische Daten gemessen:

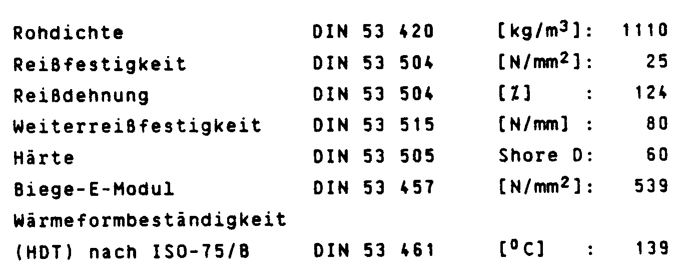

An dem eine Stunde bei 200°C getemperten Formteil wurden folgende mechanische Daten gemessen:

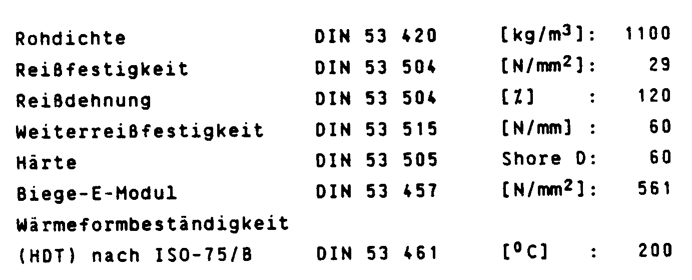

### Anmerkung zu den Beispielen 8 bis 14:

Alle Formteile ließen sich sofort nach der Entfernung um 180° biegen.

## Patentansprüche (Patentansprüche für folgende(n) Vertragsstaat(en): AT, BE, CH, DE, FR, GB, GR, IT, LI, NL, SE)

1. Polyamid-, Polyharnstoff- und gegebenenfalls Polyurethangruppen enthaltende Elastomere mit
einer Rohdichte nach DIN 53 420 von 800 bis 1400 kg/m³,
einer Reißfestigkeit nach DIN 53 504 von 15 bis 45 N/mm²,
einer Reißdehnung nach DIN 53 504 von 40 bis 400 %,
einer Weiterreißfestigkeit nach DIN 53 515 von 35 bis 140 N/mm,
einer Shore-D-Härte nach DIN 53 505 von 40 bis 80,
einem Biege-E-Modul nach DIN 53 457 von 300 bis 1800 N/mm² und
einer Wärmeformbeständigkeit (HDT) nach ISO-75/B (DIN 53 461) von 80 bis 205°C
erhältlich durch Umsetzung
a) mindestens eines organischen Polyisocyanats und/oder einer modifizierten organischen Polyisocyanatmischung mit einem NCO-Gehalt von 8 bis 33,5 Gew.%, bezogen auf das Polyisocyanatmischungsgewicht, mit
b) einer Mischung aus Polyoxyalkylen-polyaminen und Polyazomethinen, wobei diese ihrerseits erhalten werden durch Umsetzung von Polyoxyalkylen-polyaminen mit einer Funktionalität von 2 bis 4 und einem durchschnittlichen Molekulargewicht von 180 bis 10 000 und mindestens einem organischen Aldehyd oder/und Keton, und
c) mindestens einem aromatischen Diamin, das mindestens einen Alkylsubstituenten in ortho-Stellung zu jeder Aminogruppe gebunden enthält, mit einem Molekulargewicht bis 500
in Gegenwart oder Abwesenheit von
d) Katalysatoren.

2. Polyamid-, Polyharnstoff- und gegebenenfalls Polyurethangruppen enthaltende Elastomere nach Anspruch 1, dadurch gekennzeichnet, daß man die Polyoxyalkylen-polyamine und Polyazomethine in solchen Mengen verwendet, daß die Mischungen (b)
10 bis 90 % primäre Aminogruppen von Polyoxyalkylen-polyaminen mit einer Funktionalität von 2 bis 4 und einem durchschnittlichen Molekulargewicht von 180 bis 10 000 und
90 bis 10 % Azomethingruppen von Polyazomethinen, hergestellt durch Umsetzung der vorgenannten Polyoxyalkylen-polyamine mit mindestens einem aliphatischen und/oder cycloaliphatischen Aldehyd oder Keton, wobei die Prozente bezogen sind auf die Summe der Amino- und Azomethingruppen,
aufweisen.

3. Polyamid-, Polyharnstoff- und gegebenenfalls Polyurethangruppen enthaltende Elastomere nach Anspruch 1 oder 2, dadurch gekennzeichnet, daß die Mischung (b) als Polyazomethine Polyketimine, hergestellt durch Umsetzung von Polyoxyalkylenpolyaminen mit einer Funktionalität von 2 bis 4 und einem durchschnittlichen Molekulargewicht von 180 bis 10 000 mit einem aliphatischen und/oder cycloaliphatischen Keton, enthält.

4. Polyamid-, Polyharnstoff und gegebenenfalls Polyurethangruppen enthaltende Elastomere nach einem der Ansprüche 1 bis 3, dadurch gekennzeichnet, daß die modifizierten Polyisocyanatmischungen (a) mit NCO-Gehalten von 8 bis 33,6 Gew.% enthalten:
i) Carbodiimid- und/oder Urethangruppen enthaltende Polyisocyanate aus 4,4'-Diphenylmethan-diisocyanat oder einer Mischung aus 4,4'- und 2,4'-Diphenylmethan-diisocyanaten mit einem NCO-Gehalt von 8 bis 33,6 Gew.% und/oder
ii) ein NCO-Gruppen enthaltendes Prepolymer mit einem NCO-Gehalt von 8 bis 25 Gew.%, bezogen auf das Prepolymergewicht, hergestellt durch Umsetzung von Polyoxyalkylen-polyolen mit einer Funktionalität von 2 bis 4 und einem Molekulargewicht von 600 bis 6 000 mit 4,4'-Diphenylmethandiisocyanat oder einer Mischung aus 4,4'- und 2,4'-Diphenylmethan-diisocyanaten.

5. Verfahren zur Herstellung von elastischen Formkörpern auf Basis von Polyamid-, Polyharnstoff und gegebenenfalls Polyurethangruppen gebunden enthaltenden Elastomeren durch Umsetzung
a) mindestens eines organischen Polyisocyanats und/oder einer modifizierten organischen Polyisocyanatmischung mit einem NCO-Gehalt von 8 bis 33,6 Gew.%, bezogen auf das Polyisocyanatmischungsgewicht, mit
b) einer Polyazomethine enthaltenden Mischung und
c) mindestens einem aromatischen Diamin, das mindestens einen Alkylsubstituenten in ortho-Stellung zu jeder Aminogruppe gebunden enthält, mit einem Molekulargewicht bis 500
in Gegenwart oder Abwesenheit von
d) Katalysatoren
in einem offenen oder geschlossenen Formwerkzeug, dadurch gekennzeichnet, daß die Mischung (b) ein Polyoxyalkylen-polyamin und mindestens ein Polyazomethin enthält, wobei diese ihrerseits erhalten werden durch Umsetzung von Polyoxyalkylenpolyaminen mit einer Funktionalität von 2 bis 4 und einem durchschnittlichen Molekulargewicht von 180 bis 10 000 und mindestens einem organischen Aldehyd und/oder einem Keton.

6. Verfahren nach Anspruch 5, dadurch gekennzeichnet, daß man die Polyoxyalkylen-polyamine und Polyazomethine in solchen Mengen verwendet, daß die Mischungen (b)
10 bis 90 % primäre Aminogruppen von Polyoxyalkylen-polyaminen mit einer Funktionalität von 2 bis 4 und einem durchschnittlichen Molekulargewicht von 180 bis 10 000 und
90 bis 10 % Azomethingruppen von Polyazomethinen, hergestellt durch Umsetzung der vorgenannten Polyoxyalkylen-polyamine mit mindestens einem aliphatischen und/oder cycloaliphatischen Aldehyd oder Keton, wobei die Prozente bezogen sind auf die Summe der Amino- und Azomethingruppen,
aufweisen.

7. Verfahren nach Anspruch 5 oder 6, dadurch gekennzeichnet, daß die Mischung (b) als Polyazomethine Polyketimine, hergestellt durch Umsetzung von Polyoxyalkylen-polyaminen mit einer Funktionalität von 2 bis 4 und einem durchschnittlichen Molekulargewicht von 180 bis 10 000 mit einem aliphatischen und/oder cycloaliphatischen Keton, enthält.

8. Verfahren nach einem der Ansprüche 5 bis 7, dadurch gekennzeichnet, daß man die Formkörper nach der RIM-Technik in einem geschlossenen Formwerkzeug herstellt.

9. Verfahren zur Herstellung von elastischen, zelligen Formkörpern nach einem der Ansprüche 5 bis 8, dadurch gekennzeichnet, daß man die Umsetzung in Gegenwart von
a) Treibmitteln
und unter Verdichtung in einem geschlossenen Formwerkzeug durchführt.

10. Verfahren nach einem der Ansprüche 5 bis 9, dadurch gekennzeichnet, daß zur Herstellung der elastischen oder zelligen Formkörper auf Basis von Polyamid-, Polyharnstoff und gegebenenfalls Polyurethangruppen enthaltenden Elastomeren zusätzlich
f) Hilfsmittel und/oder
g) Zusatzstoffe
mitverwendet werden.

11. Verfahren nach einem der Ansprüche 5 bis 10, dadurch gekennzeichnet, daß man als aromatische Diamine, die mindestens einen Alkylsubstituenten in ortho-Stellung zu jeder Aminogruppe gebunden enthalten (c) verwendet: 1,3,5-Triethyl-2,4-phenylen-diamin, 1-Methyl-3,5-diethyl-2,4- und/oder -2,6-phenylen-diamin, 3,3'-Dialkyl-4,4'-diamino-diphenylmethane mit 1 bis 4 C-Atomen im Alkylrest und/oder 3,3',5,5'-Tetraalkyl-4,4'-diamino-diphenylmethane mit 1 bis 4 C-Atomen im Alkylrest.

12. Verfahren nach einem der Ansprüche 5 bis 11, dadurch gekennzeichnet, daß man die Aufbaukomponenten (b) und (c) in solchen Mengen verwendet, daß das Verhältnis von Ketimin- und Aminogruppen der Mischung (b) zu Aminogruppen der Aufbaukomponente (c) 95:5 bis 60:40 beträgt.

13. Verfahren nach einem der Ansprüche 5 bis 12, dadurch gekennzeichnet, daß die modifizierten Polyisocyanatmischungen (a) mit NCO-Gehalten von 8 bis 33,6 Gew.% enthalten:
i) Carbodiimid- und/oder Urethangruppen enthaltende Polyisocyanate aus 4,4'-Diphenylmethan-diisocyanat oder einer Mischung aus 4,4'- und 2,4'-Diphenylmethan-diisocyanaten mit einem NCO-Gehalt von 8 bis 33,6 Gew.% und/oder
ii) ein NCO-Gruppen enthaltendes Prepolymer mit einem NCO-Gehalt von 8 bis 25 Gew.%, bezogen auf das Prepolymergewicht, hergestellt durch Umsetzung von Polyoxyalkylen-polyolen mit einer Funktionalität von 2 bis 4 und einem Molekulargewicht von 600 bis 6 000 mit 4,4'-Diphenylmethan-diisocyanat oder einer Mischung aus 4,4'- und 2,4'-Diphenylmethan-diisocyanaten.

## Patentansprüche (Patentansprüche für folgende(n) Vertragsstaat(en): ES)

1. Verfahren zur Herstellung von elastischen Formkörpern auf Basis von Polyamid-, Polyharnstoff- und gegebenenfalls Polyurethangruppen gebunden enthaltenden Elastomeren durch Umsetzung
a) mindestens eines organischen Polyisocyanats und/oder einer modifizierten organischen Polyisocyanatmischung mit einem NCO-Gehalt von 8 bis 33,6 Gew.%, bezogen auf das Polyisocyanatmischungsgewicht, mit
b) einer Polyazomethine enthaltenden Mischung und
c) mindestens einem aromatischen Diamin, das mindestens einen Alkylsubstituenten in ortho-Stellung zu jeder Aminogruppe gebunden enthält, mit einem Molekulargewicht bis 500
in Gegenwart oder Abwesenheit von
d) Katalysatoren.
in einem offenen oder geschlossenen Formwerkzeug, dadurch gekennzeichnet, daß die Mischung (b) ein Polyoxyalkylen-polyamin und mindestens ein Polyazomethin enthält, wobei diese ihrerseits erhalten werden durch Umsetzung von Polyoxyalkylenpolyaminen mit einer Funktionalität von 2 bis 4 und einem durchschnittlichen Molekulargewicht von 180 bis 10 000 und mindestens einem organischen Aldehyd und/oder einem Keton.

2. Verfahren nach Anspruch 1, dadurch gekennzeichnet, daß man die Polyoxyalkylen-polyamine und Polyazomethine in solchen Mengen verwendet, daß die Mischungen (b)
10 bis 90 % primäre Aminogruppen von Polyoxyalkylen-polyaminen mit einer Funktionalität von 2 bis 4 und einem durchschnittlichen Molekulargewicht von 180 bis 10 000 und
90 bis 10 % Azomethingruppen von Polyazomethinen, hergestellt durch Umsetzung der vorgenannten Polyoxyalkylen-polyamine mit mindestens einem aliphatischen und/oder cycloaliphatischen Aldehyd oder Keton, wobei die Prozente bezogen sind auf die Summe der Amino- und Azomethingruppen,
aufweisen.

3. Verfahren nach Anspruch 1 oder 2, dadurch gekennzeichnet, daß die Mischung (b) als Polyazomethine Polyketimine, hergestellt durch Umsetzung von Polyoxyalkylen-polyaminen mit einer Funktionalität von 2 bis 4 und einem durchschnittlichen Molekulargewicht von 180 bis 10 000 mit einem aliphatischen und/oder cycloaliphatischen Keton, enthält.

4. Verfahren nach einem der Ansprüche 1 bis 3, dadurch gekennzeichnet, daß man die Formkörper nach der RIM-Technik in einem geschlossenen Formwerkzeug herstellt.

5. Verfahren zur Herstellung von elastischen, zelligen Formkörpern nach einem der Ansprüche 1 bis 4, dadurch gekennzeichnet, daß man die Umsetzung in Gegenwart von
a) Treibmitteln
und unter Verdichtung in einem geschlossenen Formwerkzeug durchführt.

6. Verfahren nach einem der Ansprüche 1 bis 5, dadurch gekennzeichnet, daß zur Herstellung der elastischen oder zelligen Formkörper auf Basis von Polyamid-, Polyharnstoff und gegebenenfalls Polyurethangruppen enthaltenden Elastomeren zusätzlich
f) Hilfsmittel und/oder
g) Zusatzstoffe
mitverwendet werden.

7. Verfahren nach einem der Ansprüche 1 bis 6, dadurch gekennzeichnet, daß man als aromatische Diamine, die mindestens einen Alkylsubstituenten in ortho-Stellung zu jeder Aminogruppe gebunden enthalten (c) verwendet: 1,3,5-Triethyl-2,4-phenylen-diamin, 1-Methyl-3,5-diethyl-2,4- und/oder -2,6-phenylen-diamin, 3,3'-Dialkyl-4,4'-diamino-diphenylmethane mit 1 bis 4 C-Atomen im Alkylrest und/oder 3,3',5,5'-Tetraalkyl-4,4'-diamino-diphenylmethane mit 1 bis 4 C-Atomen im Alkylrest.

8. Verfahren nach einem der Ansprüche 1 bis 7, dadurch gekennzeichnet, daß man die Aufbaukomponenten (b) und (c) in solchen Mengen verwendet, daß das Verhältnis von Ketimin- und Aminogruppen der Mischung (b) zu Aminogruppen der Aufbaukomponente (c) 95:5 bis 60:40 beträgt.

9. Verfahren nach einem der Ansprüche 1 bis 8, dadurch gekennzeichnet, daß die modifizierten Polyisocyanatmischungen (a) mit NCO-Gehalten von 8 bis 33,6 Gew.% enthalten:
i) Carbodiimid- und/oder Urethangruppen enthaltende Polyisocyanate aus 4,4'-Diphenylmethan-diisocyanat oder einer Mischung aus 4,4'- und 2,4'-Diphenylmethan-diisocyanaten mit einem NCO-Gehalt von 8 bis 33,6 Gew.% und/oder
ii) ein NCO-Gruppen enthaltendes Prepolymer mit einem NCO-Gehalt von 8 bis 25 Gew.%, bezogen auf das Prepolymergewicht, hergestellt durch Umsetzung von Polyoxyalkylen-polyolen mit einer Funktionalität von 2 bis 4 und einem Molekulargewicht von 600 bis 6 000 mit 4,4'-Diphenylmethan-diisocyanat oder einer Mischung aus 4,4'- und 2,4'-Diphenylmethan-diisocyanaten.

## Claims (Claims for the following Contracting State(s): AT, BE, CH, DE, FR, GB, GR, IT, LI, NL, SE)

1. An elastomer containing polyamide, polyurea and, if desired, polyurethane groups, having
a bulk density in accordance with DIN 53 420 of from 800 to 1400 kg/m³,
a tear strength in accordance with DIN 53 504 of from 15 to 45 N/mm²,
an elongation at break in accordance with DIN 53 504 of from 40 to 400 %,
a tear propagation strength in accordance with DIN 53 515 of from 35 to 140 N/mm,
a Shore D harness in accordance with DIN 53 505 of from 40 to 80,
a modulus of elasticity in bending in accordance with DIN 53 457 of from 300 to 1800 N/mm²,
and
a heat deflection temperature (HDT) in accordance with ISO-75/B (DIN 53 461) of from 80 to 205°C,
obtainable by reacting
a) at least one organic polyisocyanate and/or a modified organic polyisocyanate mixture having an NCO content of from 8 to 33.5 % by weight, based on the weight of the polyisocyanate mixture, with
b) a mixture of polyoxyalkylene-polyamines and polyazomethines, where these are themselves obtained by reacting polyoxyalkylene-polyamines having a functionality of from 2 to 4 and a mean molecular weight of from 180 to 10,000 with at least one organic aldehyde and/or ketone, and
c) at least one aromatic diamine containing at least one alkyl substituent bonded in the ortho-position to each amino group, having a molecular weight of up to 500,
in the presence or absence of
d) catalysts.

2. An elastomer containing polyamide, polyurea and, if desired, polyurethane groups as claimed in claim 1, wherein the polyoxyalkylene-polyamines and polyazomethines are used in such amounts that the mixtures (b) contain
from 10 to 90 % of primary amino groups of polyoxyalkylene-polyamines having a functionality of from 2 to 4 and a mean molecular weight of from 180 to 10,000, and from 90 to 10 % of azomethine groups of polyazomethines, prepared by reacting the abovementioned polyoxyalkylene-polyamines with at least one aliphatic and/or cycloaliphatic aldehyde or ketone, where the percentages are based on the total number of amino and azomethine groups.

3. An elastomer containing polyamide, polyurea and, if desired, polyurethane groups as claimed in claim 1 or 2, wherein the mixture (b) contains, as polyazomethines, polyketimines prepared by reacting polyoxyalkylene-polyamines having a functionality of from 2 to 4 and a mean molecular weight of from 180 to 10,000 with an aliphatic and/or cycloaliphatic ketone.

4. An elastomer containing polyamide, polyurea and, if desired, polyurethane groups as claimed in any one of claims 1 to 3, wherein the modified polyisocyanate mixtures (a) having NCO contents of from 8 to 33.6 % by weight contain:
i) carbodiimide and/or urethane group-containing polyisocyanates made from 4,4'-diphenylmethane diisocyanate or a mixture of 4,4'- and 2,4'-diphenylmethane diisocyanates having an NCO content of from 8 to 33.6 % by weight, and/or
ii) an NCO group-containing prepolymer having an NCO content of from 8 to 25 % by weight, based on the weight of the prepolymer, prepared by reacting polyoxyalkylene-polyols having a functionality of from 2 to 4 and a molecular weight of from 600 to 6000 with 4,4' diphenylmethane diisocyanate or a mixture of 4,4'- and 2,4'-diphenylmethane diisocyanates.

5. A process for the production of elastic moldings based on elastomers containing bonded polyamide, polyurea and, if desired, polyurethane groups by reacting
a) at least one organic polyisocyanate and/or a modified organic polyisocyanate mixture having an NCO content of from 8 to 33.6 % by weight, based on the weight of the polyisocyanate mixture, with
b) a polyazomethine-containing mixture and
c) at least one aromatic diamine containing at least one alkyl substituent bonded in the ortho-position to each amino group, having a molecular weight of up to 500,
in the presence or absence of
d) catalysts,
in an open or closed mold, wherein the mixture (b) contains a polyoxyalkylene-polyamine and at least one polyazomethine, where these are themselves obtained by reacting polyoxyalkylene-polyamines having a functionality of from 2 to 4 and a mean molecular weight of from 180 to 10,000 with at least one organic aldehyde and/or ketone.

6. A process as claimed in claim 5, wherein the polyoxyalkylene-polyamines and polyazomethines are used in such amounts that the mixtures (b) contain
from 10 to 90 % of primary amino groups of polyoxyalkylene-polyamines having a functionality of from 2 to 4 and a mean molecular weight of from 180 to 10,000, and from 90 to 10 % of azomethine groups of polyazomethines prepared by reacting the abovementioned polyoxyalkylene-polyamines with at least one aliphatic and/or cycloaliphatic aldehyde or ketone, where the percentages are based on the total number of amino and azomethine groups.

7. A process as claimed in claim 5 or 6, wherein the mixture (b) contains, as polyazomethines, polyketimines prepared by reacting polyoxyalkylene-polyamines having a functionality of from 2 to 4 and a mean molecular weight of from 180 to 10,000 with an aliphatic and/or cycloaliphatic ketone.

8. A process as claimed in any of claims 5 to 7, wherein the moldings are produced by the RIM technique in a closed mold.

9. A process for the production of elastic, cellular moldings as claimed in any of claims 5 to 8, wherein the reaction is carried out in the presence of
e) blowing agents
and with compaction in a closed mold.

10. A process as claimed in of claims 5 to 9, wherein, to produce elastic or cellular moldings based on elastomers containing polyamide, polyurea and, if desired, polyurethane groups,
f) auxiliaries and/or
g) additives
are additionally used.

11. A process as claimed in any of claims 5 to 10, wherein the aromatic diamines (c) containing at least one alkyl substituent bonded in the ortho-position to each amino group are: 1,3,5-triethyl-2,4-phenylenediamine, 1-methyl-3,5-diethyl-2,4- and/or 2,6-phenylenediamine, 3,3'-dialkyl-4,4'-diaminodiphenylmethanes having 1 to four carbon atoms in the alkyl radical and/or 3,3',5,5'-tetraalkyl-4,4'-diaminodiphenylmethanes having 1 to 4 carbon atoms in the alkyl radical.

12. A process as claimed in any of claims 5 to 11, wherein the formative components (b) and (c) are used in such amounts that the ratio between ketimine and amino groups of the mixture (b) and amino groups of formative component (c) is from 95:5 to 60:40.

13. A process as claimed in any of claims 5 to 12, wherein the modified polyisocyanate mixtures (a) having NCO contents of from 8 to 33.6 % by weight contain:
i) carbodiimide and/or urethane group-containing polyisocyanates made from 4,4'-diphenylmethane diisocyanate or a mixture of 4,4'- and 2,4'-diphenylmethane diisocyanates having an NCO content of from 8 to 33.6 % by weight, and/or
ii) an NCO group-containing prepolymer having an NCO content of from 8 to 25 % by weight, based on the weight of the prepolymer, prepared by reacting polyoxyalkylene-polyols having a functionality of from 2 to 4 and a molecular weight of from 600 to 6000 with 4,4'-diphenylmethane diisocyanate or a mixture of 4,4'- and 2,4'-diphenylmethane diisocyanates.

## Claims (Claims for the following Contracting State(s): ES)

1. A process for the production of elastic moldings based on elastomers containing bonded polyamide, polyurea and, if desired, polyurethane groups by reacting
a) at least one organic polyisocyanate and/or a modified organic polyisocyanate mixture having an NCO content of from 8 to 33.6 % by weight, based on the weight of the polyisocyanate mixture, with
b) a polyazomethine-containing mixture and
c) at least one aromatic diamine containing at least one alkyl substituent bonded in the ortho-position to each amino group, having a molecular weight of up to 500,
in the presence or absence of
d) catalysts,
in an open or closed mold, wherein the mixture (b) contains a polyoxyalkylene-polyamine and at least one polyazomethine, where these are themselves obtained by reacting polyoxyalkylene-polyamines having a functionality of from 2 to 4 and a mean molecular weight of from 180 to 10,000 with at least one organic aldehyde and/or ketone.

2. A process as claimed in claim 1, wherein the polyoxyalkylene-polyamines and polyazomethines are used in such amounts that the mixtures (b) contain
from 10 to 90 % of primary amino groups of polyoxyalkylene-polyamines having a functionality of from 2 to 4 and a mean molecular weight of from 180 to 10,000, and from 90 to 10 % of azomethine groups of polyazomethines prepared by reacting the abovementioned polyoxyalkylene-polyamines with at least one aliphatic and/or cycloaliphatic aldehyde or ketone, where the percentages are based on the total number of amino and azomethine groups.

3. A process as claimed in claim 1 or 2, wherein the mixture (b) contains, as polyazomethines, polyketimines prepared by reacting polyoxyalkylene-polyamines having a functionality of from 2 to 4 and a mean molecular weight of from 180 to 10,000 with an aliphatic and/or cycloaliphatic ketone.

4. A process as claimed in any of claims 1 to 3, wherein the moldings are produced by the RIM technique in a closed mold.

5. A process for the production of elastic, cellular moldings as claimed in any of claims 1 to 4, wherein the reaction is carried out in the presence of
e) blowing agents
and with compaction in a closed mold.

6. A process as claimed in of claims 1 to 5, wherein, to produce elastic or cellular moldings based on elastomers containing polyamide, polyurea and, if desired, polyurethane groups,
f) auxiliaries and/or
g) additives
are additionally used.

7. A process as claimed in any of claims 1 to 6, wherein the aromatic diamines (c) containing at least one alkyl substituent bonded in the ortho-position to each amino group are: 1,3,5-triethyl-2,4-phenylenediamine, 1-methyl-3,5-diethyl-2,4- and/or -2,6-phenylenediamine, 3,3'-dialkyl-4,4'-diaminodiphenylmethanes having 1 to four carbon atoms in the alkyl radical and/or 3,3',5,5'-tetraalkyl-4,4'-diaminodiphenylmethanes having 1 to 4 carbon atoms in the alkyl radical.

8. A process as claimed in any of claims 1 to 7, wherein the formative components (b) and (c) are used in such amounts that the ratio between ketimine and amino groups of the mixture (b) and amino groups of formative component (c) is from 95:5 to 60:40.

9. A process as claimed in any of claims 1 to 8, wherein the modified polyisocyanate mixtures (a) having NCO contents of from 8 to 33.6 % by weight contain:
i) carbodiimide and/or urethane group-containing polyisocyanates made from 4,4'-diphenylmethane diisocyanate or a mixture of 4,4'- and 2,4'-diphenylmethane diisocyanates having an NCO content of from 8 to 33.6 % by weight, and/or
ii) an NCO group-containing prepolymer having an NCO content of from 8 to 25 % by weight, based on the weight of the prepolymer, prepared by reacting polyoxyalkylene-polyols having a functionality of from 2 to 4 and a molecular weight of from 600 to 6000 with 4,4'-diphenylmethane diisocyanate or a mixture of 4,4'- and 2,4'-diphenylmethane diisocyanates.

## Revendications (Revendications pour l'(les) Etat(s) contractant(s) suivant(s): AT, BE, CH, DE, FR, GB, GR, IT, LI, NL, SE)

1. Elastomères contenant des groupes polyamide, polyurée et le cas échéant polyuréthanne, ayant
une densité apparente selon DIN 53 420 de 800 à 1400 kg/m³,
une résistance à la rupture selon DIN 53 504 de 15 à 45 N/mm²,
un allongement à la rupture selon DIN 53 504 de 40 à 400 %,
une résistance à la rupture sur éprouvette entaillée selon DIN 53 515 de 35 à 140 N/mm,
une dureté Shore D selon DIN 53 505 de 40 à 80,
un module d'élasticité à la flexion selon DIN 53 457 de 300 à 1800 N/mm², et
une stabilité dimensionnelle à la chaleur (HDT) selon ISO-75/B (DIN 53 461) de 80 à 205°C,
qu'on obtient en faisant réagir :
a) au moins un polyisocyanate organique et/ou un mélange de polyisocyanates organiques modifiés d'une teneur en NCO de 8 à 33,5 % du poids du mélange de polyisocyanates,
avec
b) un mélange de polyoxyalkylène-polyamines et de polyazométhines elles-mêmes obtenues par réaction de polyoxyalkylène-polyamines ayant une fontionnalité de 2 à 4 et un poids moléculaire moyen de 180 à 10000 et au moins un aldéhyde et/ou une cétone organique,
et
c) au moins une diamine aromatique portant au moins un substituant alkyle en position ortho de chaque groupe amino et ayant un poids moléculaire allant jusqu'à 500,
en présence ou en l'absence de
d) des catalyseurs.

2. Elastomères contenant des groupes polyamide, polyurée et le cas échéant pooyuréthanne selon la revendication 1, caractérisés en ce que l'on utilise les polyoxyalkylène-polyamines et les polyazométhines en quantités telles que les mélanges b) contiennent :
de 10 à 90 % de groupes amino primaires des polyoxyalkylène-polyamines ayant une fonctionnalité de 2 à 4 et un poids moléculaire moyen de 180 à 10000, et
de 90 à 10% de groupes azométhine des polyazométhines préparées par réaction des polyoxyalkylène-polyamines ci-dessus avec au moins un aldéhyde ou une cétone aliphatique et/ou cycloaliphatique, les pourcentages se rapportant à la somme des groupes amino et azométhine.

3. Elastomères contenant des groupes polyamide, polyurée et le cas échéant polyuréthanne selon la revendication 1 ou 2, caractérisés en ce que le mélange b) contient en tant que polyazométhines des polycétimines préparées par réaction des polyoxyalkylène-polyamines ayant une fonctionnalité de 2 à 4 et un poids moléculaire moyen de 180 à 10000 avec une cétone aliphatique et/ou cycloaliphatique.

4. Elastomères contenant des groupes polyamide, polyurée et éventuellement polyuréthanne selon une des revendications 1 à 3, caractérisés en ce que les mélanges de polyisocyanates modifiés a), à teneurs en NCO de 8 à 33,6 % en poids, contiennent :
i) des polyisocyanates, contenant des groupes carbodiimide et/ou uréthanne, du 4,4'-diphénylméthane-diisocyanate ou d'un mélange de 4,4'- et 2,4'-diphénylméthane-diisocyanates d'une teneur en NCO de 8 à 33,6 % en poids et/ou
ii) un prépolymère contenant des groupes NCO, d'une teneur en NCO de 8 à 25 % de son poids, préparé par réaction de polyoxyalkylène-polyols ayant une fonctionnalité de 2 à 4 et un poids moléculaire moyen de 600 à 6000, avec le 4,4'-diphénylméthane-diisocyanate ou un mélange de 4,4'- et 2,4'-diphénylméthane-diisocyanates.

5. Procédé de préparation de corps moulés élastiques à base d'élastomères contenant des groupes polyamide, polyurée et éventuellement polyuréthanne chimiquement combinés par réaction de :
a) au moins un polyisocyanate organique et/ou un mélange de polyisocyanates organiques modifiés, d'une teneur en NCO de 8 à 33,6% du poids du mélange de polyisocyanates,
avec
b) un mélange contenant des polyazométhine, et
c) au moins une diamine aromatique portant au moins un substituant alkyle en position ortho de chaque groupe amino et ayant un poids moléculaire allant jusqu'à 500
en présence ou en l'absence de
d) catalyseurs
dans un outil de moulage ouvert ou fermé, ce procédé se caractérisant en ce que le mélange b) contient une polyoxyalkylène-polyamine et au moins une polyazométhine, celle-ci ayant été obtenue par réaction de polyoxyalkylène-polyamines ayant une fonctionnalité de 2 à 4 et un poids moléculaire moyen de 180 à 10000 et d'au moins un aldéhyde et/ou une cétone organique.

6. Procédé selon la revendication 5, caractérisé en ce que l'on utilise des polyoxyalkylène-polyamines et des plyazométhines en quantités telles que les mélanges b) contiennent
de 10 à 90 % de groupes amino primaires des polyoxyalkylène-polyamines ayant une fonctionnalité de 2 à 4 et un poids moléculaire de 180 à 10000, et
de 90 à 10 % de groupes azométhine des polyazométhines préparées par réaction des polyoxyalkylène-polyamines ci-dessus avec au moins un aldéhyde ou une cétone aliphatique et/ou cycloaliphatique, les pourcentages se rapportant à la somme des groupes amino et azométhine.

7. Procédé selon la revendication 5 ou 6, caractérisé en ce que le mélange b) contient en tant que polyazométhines des polycétimines préparées par réaction de polyoxyalkylène-polyamines de fonctionnalité 2 à 4 et un poids moléculaire moyen de 180 à 10000 avec une cétone aliphatique et/ou cycloaliphatique.

8. Procédé selon une des revendications 5 à 7, caractérisé en ce que les corps moulés ont été préparés par la technique RIM dans un outil de moulage fermé.

9. Procédé de préparation de corps moulés alvéolaires élastiques selon une des revendications 5 à 8, caractérisé en ce que l'on effectue la réaction en présence de
a) agents porogènes,
et sous compression dans un outil de moulage fermé.

10. Procédé selon une des revendications 5 à 9, caractérisé en ce que, pour la préparation des corps moulés élastiques ou alvéolaires à base d'élastomères contenant des groupes polyamide, polyurée et éventuellement polyuréthanne, on utilise en outre conjointement :
f) des produits auxiliaires et/ou
g) des additifs.

11. Procédé selon une des revendications 5 à 10, caractérisé en ce que l'on utilise en tant que diamines aromatiques portant un substituant alkyle en position ortho de chaque groupe amino, c) : la 1,3,5-triéthyl-2,4-phénylène-diamine, la 1-méthyl-3,5-diéthyl-2,4- et/ou -2,6-phénylène-diamine, des 3,3'-dialkyl-4,4'-diaminodiphénylméthanes contenant 1 à 6 atomes de carbone dans les groupes alkyle et/ou des 3,3'-5,5'-tétraalkyl-4,4'-diaminodiphénylméthanes contenant 1 à 4 atomes de carbone dans les groupes alkyle.

12. Procédé selon une des revendications 5 à 11, caractérisé en ce que l'on utilise les composants de synthèse b) et c) en quantités telles que les proportions relatives entre les groupes cétimine et les groupes amino du mélange b) d'une part, et les groupes amino du composant de synthèse c) d'autre part, vont de 95:5 à 60:40.

13. Procédé selon une des revendications 5 à 12, caractérisé en ce que les mélanges de polyisocyanates modifiés a) à teneurs en NCO de 8 à 33,6 % en poids contiennent :
i) des polyisocyanates, contenant des groupes carbodiimide et/ou uréthanne, du 4,4'-diphénylméthane-diisocyanate ou d'un mélange de 4,4'- et 2,4'-diphényl-méthane-diisocyanates d'une teneur en NCO de 8 à 33,6 %, et/ou
ii) un prépolymère contenant des groupes NCO, d'une teneur en NCO de 8 à 25 % de son poids, préparé par réaction de polyoxyalkylène-polyols ayant une fonctionnalité de 2 à 4 et un poids moléculaire moyen de 600 à 6000 avec le 4,4'-diphénylméthane-diisocyanate ou un mélange de 4,4'- et 2,4'-diphénylméthane-diisocyanates.

## Revendications (Revendications pour l'(les) Etat(s) contractant(s) suivant(s): ES)

1. Procédé de préparation de corps moulés élastiques à base d'élastomères contenant des groupes polyamide, polyurée et éventuellement polyuréthanne à l'état chimiquement combiné, par réaction de :
a) au moins un polyisocyanate organique et/ou un mélange de polyisocyanates organiques modifiés d'une teneur en NCO de 8 à 33,6 % en poids par rapport au poids du mélange de polyisocyanates,
avec
b) un mélange contenant des polyazométhane, et
c) au moins une diamine aromatique portant au moins un substituant alkyle en position ortho de chaque groupe amino et ayant un poids moléculaire allant jusqu'à 500,
en présence ou en l'absence de :
d) catalyseurs,
dans un outil de moulage ouvert ou fermé, caractérisé en ce que le mélange b) contient une polyoxyalkylène-polyamine et au moins une polyazométhine, celle-ci ayant été obtenue par réaction de polyoxyalkylène-polyamines de fonctionnalité 2 à 4 et ayant un poids moléculaire moyen de 180 à 10000 et d'au moins un aldéhyde et/ou une cétone organique.

2. Procédé selon la revendication 1, caractérisé en ce que l'on utilise des polyoxyalkylène-polyamines et des polyazométhines en quantités telles que le mélange b) contiennent :
de 10 à 90 % de groupes amino primaires des polyoxyalkylène-polyamines ayant une fonctionnalité de 2 à 4 et un poids moléculaire moyen de 180 à 10000, et
90 à 10 % de groupes azométhine des polyazométhines préparées par réaction des polyoxyalkylène-polyamines ci-dessus avec au moins un aldéhyde ou une cétone aliphatique et/ou cycloaliphatique, les pourcentages se rapportant à la somme des groupes amino et azométhine.

3. Procédé selon la revendication 1 ou 2, caractérisé en ce que le mélange b) contient en tant que polyazométhines des polycétimines préparées par réaction de polyoxyalkylène-polyamines ayant une fonctionnalité de 2 à 4 et un poids moléculaire moyen de 180 à 10000 avec une cétone aliphatique et/ou cycloaliphatique.

4. Procédé selon une des revendications 1 à 3, caractérisé en ce que les corps moulés sont préparés par la technique RIM dans un outil de moulage fermé.

5. Procédé de préparation de corps moulés alvéolaires élastiques selon une des revendications 1 à 4, caractérisé en ce que l'on effectue la réaction en présence de :
a) agents porogènes,
et sous compression dans un outil de moulage fermé.

6. Procédé selon une des revendications 1 à 5, caractérisé en ce que, pour la préparation de corps moulés élastiques ou alvéolaires à base d'élastomères contenant des groupes polyamide, polyurée et éventuellement polyuréthanne, on utilise en outre conjointement :
f) des produits auxiliaires et/ou
g) des additifs.

7. Procédé selon une des revendications 1 à 6, caractérisé en ce que l'on utilise en tant que diamines aromatiques portant au moins un substituant alkyle en position ortho de chaque groupe amino c) : la 1,3,5-triéthyl-2,4-phénylène-diamine, la 1-méthyl-3,5-diéthyl-2,4- et/ou -2,6-phénylène-diamine, des 3,3'-dialkyl-4,4'-diamino-diphénylméthannes contenant 1 à 4 atomes de carbone dans chaque groupe alkyle et/ou des 3,3'-5,5'-tétraalkyl-4,4'-diamino-diphénylméthannes contenant 1 à 4 atomes de carbone dans chaque groupe alkyle.

8. Procédé selon une des revendications 1 à 7, caractérisé en ce que les composants de synthèse b) et c) sont utilisés en quantités telles que les proportions relatives entre les groupes cétimine et les groupes amino du mélange b) et les groupes amino du composant de synthèse c) vont de 95:5 à 60:40.

9. Procédé selon une des revendications 1 à 8, caractérisé en ce que les mélanges de polyisocyanates modifiés a), à teneurs en NCO de 8 à 33,6 % en poids, contiennent :
i) des polyisocyanates, contenant des carbodiimide et/ou uréthanne, du 4,4'-diphénylméthane-diisocyanate ou d'un mélange de 4,4'- et 2,4'-diphénylméthane-diisocyanates d'une teneur en NCO de 8 à 33, 6 % en poids, et/ou
ii) un prépolymère contenant des groupes NCO, d'une teneur en NCO de 8 à 25 % de son poids, qui a été préparé par réaction de polyoxyalkylène-polyols ayant une fonctionnalité de 2 à 4 et un poids moléculaire moyen de 600 à 6000 avec le 4,4'-diphénylméthane-diisocyanate ou un mélange de 4,4'- et de 2,4'-diphénylméthane-diisocyanates.
